# EUROPEAN PATENT APPLICATION

(11) **EP 4 012 348 A1**
(43) Date of publication of application: **15.06.2022**
(21) Application number: 20850267.4
(22) Date of filing: 29.07.2020
(51) Int. Cl.: G01C 21/36, G06F 3/0484

(54) **ANALYSIS DEVICE AND INFORMATION PROCESSING SYSTEM**

(30) Priority: 05.08.2019 JP 2019144079; 05.08.2019 JP 2019144080; 29.06.2020 JP 2020111886
(71) Applicant: Micware Co., Ltd., Kobe-shi,Hyogo, 650-0035 (JP)
(72) Inventor: MAKINO, Hiroyuki, Kobe-shi, Hyogo 650-0044 (JP)
(74) Representative: Vossius & Partner Patentanwälte Rechtsanwälte mbB
(86) International application number: PCT/JP2020/029001
(87) International publication number: WO 2021/024871

(57) **Abstract**

An analyzing device includes: an obtaining section configured to obtain instruction data and screen data from an information processing device including an input section and a display section, the instruction data identifying a user instruction, the screen data identifying a screen that is displayed on the display section by screen switching in a case where the user instruction has been inputted; and an analyzing section configured to analyze the instruction data and the screen data.

## Description

### Technical Field

The present invention relates to an analyzing device and an information processing system each of which obtains screen data that identifies a screen displayed by a display section.

### Background Art

Patent Literature 1 discloses a conventional navigation device. This navigation device records the number of times an operation button is selected by a user, and changes a display form of the operation button on an operation screen on the basis of the number of times the operation button is selected. According to the navigation device disclosed in Patent Literature 1, it is possible to display an operation screen that appropriately reflects a result of operation by the user.

### Citation List

### [Patent Literature]

[Patent Literature 1] Japanese Patent Application Publication Tokukai No. 2010-38620

### Summary of Invention

### Technical Problem

In recent years, for example, in a navigation device mounted on a motor vehicle, the number of screens that can be displayed on a display section tends to increase as a new function is added. Therefore, operation of an information processing device such as a navigation device is complicated. Accordingly, a new technique for facilitating the operation of the information processing device has been desired.

It is an object of the present invention to provide an analyzing device and an information processing device, each of which can lead to improvement in usability of an information processing device.

### Solution to Problem

An analyzing device in accordance with a first aspect of the present disclosure includes an obtaining section and an analyzing section. The obtaining section obtains each of instruction data and screen data from an information processing device. The information processing device has an input section and a display section. Via the input section, a user instruction is inputted. The user instruction refers to an instruction made by a user. The display section displays two or more screens by screen switching. The screens are each a screen associated with a predetermined function. The instruction data identifies the user instruction. The screen data identifies a screen. The screen refers to a screen that is displayed on the display section by screen switching in a case where the user instruction has been inputted. The analyzing section analyzes the instruction data and the screen data which have been obtained by the obtaining section.

### Advantageous Effects of Invention

An aspect of the present invention can lead to improvement in usability of an information processing device.

### Brief Description of Drawings

Fig. 1 is a diagram illustrating a configuration of an information processing system which includes a navigation device in accordance with Embodiment 1.
Fig. 2 illustrates examples of a destination search menus screen.
Fig. 3 is a diagram illustrating an example of a telephone number search screen.
Fig. 4 is a graph showing an example result of analysis by an analyzing section.
Fig. 5 is a graph showing another example result of analysis by the analyzing section.
Fig. 6 is a diagram illustrating another example result of analysis by the analyzing section.
Fig. 7 is a diagram illustrating another example result of analysis by the analyzing section.
Fig. 8 is a flowchart showing a process procedure of the information processing system for updating first definition information and for obtaining transition data.
Fig. 9 is a flowchart showing a process procedure of a server in the information processing system.
Fig. 10 is a flowchart showing a process procedure of a navigation device for receiving second definition information.
Fig. 11 is a flowchart showing an example procedure of analysis processing which is performed by a server.
Fig. 12 is a diagram illustrating a configuration of an information processing system which includes a server in accordance with Embodiment 2.
Fig. 13 is a flowchart showing a process procedure of the server in accordance with Embodiment 2.
Fig. 14 is a diagram illustrating a configuration of an information processing system in accordance with Embodiment 3.
Fig. 15 is a table showing information which is used in the information processing system in accordance with Embodiment 3.
Fig. 16 is a flowchart showing a process procedure of a navigation device in accordance with Embodiment 3.
Fig. 17 is a flowchart showing a process procedure of a first server in accordance with Embodiment 3.
Fig. 18 is a flowchart showing a process procedure of the first server in accordance with Embodiment 3.
Fig. 19 is a flowchart showing a process procedure of a second server in accordance with Embodiment 3.
Fig. 20 is a flowchart showing a process procedure of the second server in accordance with Embodiment 3.

### Description of Embodiments

### <Embodiment 1>

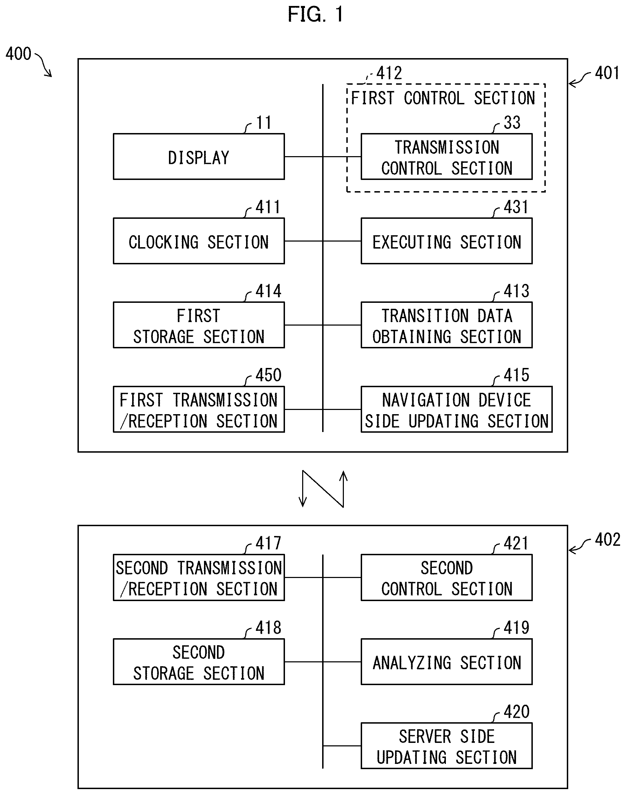

Fig. 1 is a diagram illustrating a configuration of an information processing system 400 which includes a navigation device 401 in accordance with Embodiment 1 of the present invention. The information processing system 400 includes the navigation device 401 and a server 402. The navigation device 401 corresponds to an information processing device.

The navigation device 401 of Embodiment 1 is configured such that a screen layout of each screen that is to be displayed by the display 11 is changed on the basis of the history of operations performed by a user on the navigation device 401.

Such a navigation device 401 includes an executing section 431, the display 11, a clocking section 411, a first control section 412, a transition data obtaining section 413, a first storage section 414, a first transmission/reception section 450, and a navigation device side updating section 415. The first control section 412 includes a transmission control section 33.

The executing section 431 detects that an accessory (ACC) power of a motor vehicle which is a mobile body is switched ON, and transmits, to the navigation device side updating section 415, a signal indicating that the ACC power is switched ON. The executing section 431 also detects that the ACC power of the motor vehicle is switched OFF, and transmits, to the transmission control section 33, a signal indicating that the ACC power is switched OFF. The navigation device 401 has a power switched ON when the ACC power is switched ON or when a power of the motor vehicle is switched ON.

The display 11 is made of a touch panel that functions as a display section and an input section. The display 11 displays two or more screens by screen switching in response to an operation performed by a user. The two or more screens correspond to two or more functions, respectively. Specifically, when a user taps a button display position where a button is displayed, the display 11 switches a present screen to a screen that corresponds to the button. Hereinafter, tapping on the button display position of the display 11 is also described as "pressing a button". When the user presses the button, a user instruction is inputted to the display 11.

The screen layout of each screen that is displayed by the display 11 is defined by first definition information. For example, the first definition information determines a design, a size, a location, etc. of a button that is to be displayed by the display 11. The first definition information also determines characters etc. which are to be displayed by the display 11 within a frame border of the button.

Such first definition information is updated by the navigation device side updating section 415 at a predetermined time, on the basis of the history of operations performed by a user on the navigation device 401. When the first definition information is updated, the screen layout of the screen that is displayed by the display 11 is changed. How the first definition information is updated by the navigation device side updating section 415 will be described later.

Examples of the screen that can be displayed by the display 11 by screen switching include a navigation menu screen, a destination search menu screen, a telephone number search screen, and a route guide screen.

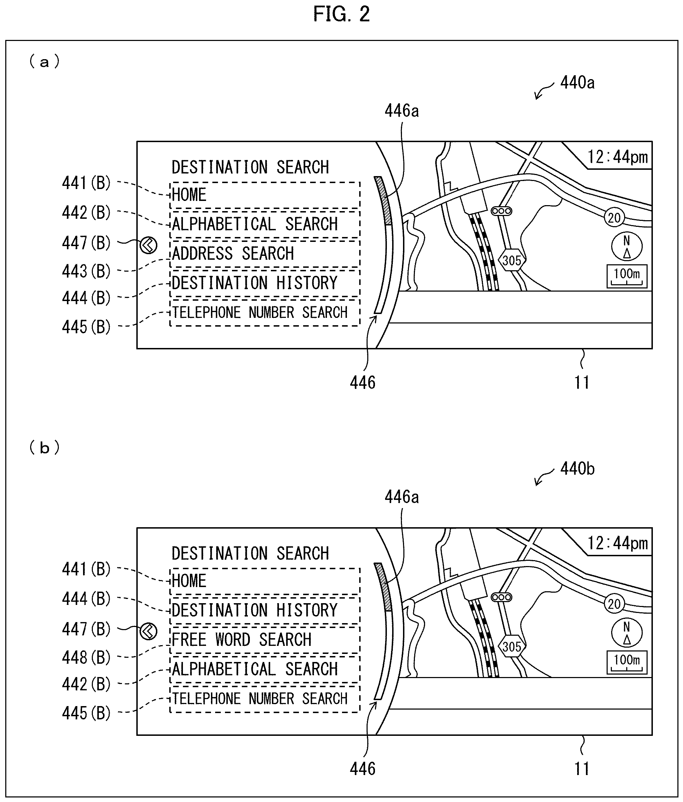

The navigation menu screen is basically a screen that is displayed first when the navigation device 401 is activated. In Embodiment 1, the display 11 displays, in the navigation menu screen, buttons for switching to respective screens associated with a navigation function, an audio function, and a function of changing a setting of the navigation device 401, and the like. When a user presses the button for switching to the screen associated with the navigation function, the display 11 displays a destination search menu screen 440a as illustrated in Fig. 2.

Fig. 2 illustrates respective examples of destination search menu screens 440a and 440b. (a) of Fig. 2 illustrates the destination search menu screen 440a which is displayed by display 11, on the basis of the first definition information prior to update by the navigation device side updating section 415. Hereinafter, this destination search menu screen 440a may be also referred to as "first destination search menu screen 440a". (b) of Fig. 2 shows the destination search menu screen 440b which is displayed by display 11, on the basis of the first definition information after the update by the navigation device side updating section 415. Hereinafter, this destination search menu screen 440b may be also referred to as "second destination search menu screen 440b".

When the button for switching to the screen associated with the navigation function is pressed on the navigation menu screen prior to update of the first definition information, the display 11 displays the first destination search menu screen 440a illustrated in (a) of Fig. 2. On the other hand, when the above button is pressed on the navigation menu screen after the update of the first definition information, the display 11 displays the second destination search menu screen 440b illustrated in (b) of Fig. 2.

Hereinafter, various buttons which are displayed by the display 11 will be each also referred to as "button B", unless the name of such a button is specifically specified. The first destination search menu screen 440a and the second destination search menu screen 440b differ from each other in names and locations of displayed buttons B.

In the first destination search menu screen 440a illustrated in (a) of Fig. 2, the display 11 displays, along a vertical line, a home button 441, an alphabetical search button 442, an address search button 443, a destination history button 444, and a telephone number search button 445.

The home button 441 corresponds to a home search function. In the home search function, a user's home which has been registered in the navigation device 401 is set as a destination. The alphabetical search button 442 corresponds to an alphabetical search function. In the alphabetical search function, the destination is set by a user's input of a destination address. The address search button 443 corresponds to an address search function. In the address search function, the destination is set by a user's selection of a prefecture/state and a municipality name which are displayed by the display 11. The destination history button 444 corresponds to a destination history function. In the destination history function, a place which was set as the destination in the past is set again as a destination. The telephone number search button 445 corresponds to a telephone number search function. In the telephone number search function, the destination is set by a user's input of the telephone number of the destination.

In the home button 441, the characters "HOME" is displayed. In the alphabetical search button 442, the characters "ALPHABETICAL SEARCH" is displayed. In the address search button 443, the characters "ADDRESS SEARCH" is displayed. In the destination history button 444, the characters "DESTINATION HISTORY" is displayed. In the telephone number search button 445, the characters "TELEPHONE NUMBER SEARCH" is displayed.

In Embodiment 1, a back button 447 is displayed at the left end of each of the destination search menu screens 440a and 440b. In the back button 447, a sideways arrow is displayed. When a user presses the back button 447, the display 11 switches the destination search menu screen 440a or 440b to the navigation menu screen that has been displayed immediately preceding the destination search menu screen 440a or 440b.

Further, the display 11 displays a scroll bar 446 for scrolling the destination search menu screen 440a or 440b in a central portion of the destination search menu screen 440a or 440b.

The screen layout of each screen affects usability of the navigation device 401. The usability means user-friendliness. For example, it can be said that a button B, which is displayed without scrolling, is relatively easy for a user to use. On the other hand, a button B which is not displayed unless the screen is scrolled is relatively difficult for the user to use, because additional effort of the user is needed for displaying the button B. In the first destination search menu screen 440a shown in (a) of Fig. 2, the home button 441, the alphabetical search button 442, the address search button 443, the destination history button 444, and the telephone number search button 445 are buttons B which are easy for a user to use.

In Embodiment 1, the navigation device 401 has a housing on which two or more operation buttons (not shown) are formed. The input section described above may include such operation buttons.

The navigation device 401 may include an input device such as a voice input device which recognizes voice of a user and operates the navigation device 401. The input section may include the input device.

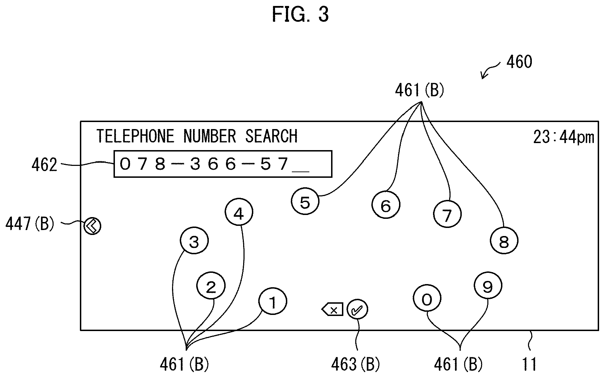

Fig. 3 is a diagram illustrating an example of the telephone number search screen 460. The phone number search screen 460 is displayed by the display 11 when the phone number search button 445 shown in Fig. 2 is pressed.

As illustrated in Fig. 3, the display 11 displays nine number buttons 461 showing numbers of 1 to 9, respectively, in the telephone number search screen 460. When one of the number buttons 461 is pressed, the display 11 displays the number corresponding to that number button 461 in a number display field 462. The navigation device 401 searches for an address or location corresponding to the telephone number entered when the user presses an enter button 463.

The display 11 displays a route guide screen showing a route from the present location to the destination on a map, assuming that the address or location retrieved is the destination. Further, when the back button 447 of the telephone number search screen 460 is pressed, the display 11 switches the present screen to a previously displayed destination search menu screen 440a or 440b.

In this way, the navigation device 401 causes screen transitions in the following order in response to operations performed by a user: the navigation menu screen, the first destination search menu screen 440a, the telephone number search screen 460, and then to the route guidance screen. The route guide screen displays a route guide start button. The navigation device 401 starts navigation when the route guide start button is pressed.

The navigation function can be performed by using the address search function, the destination history function, or the like, instead of the telephone number search function. However, these search functions are not usually used at the same frequency. It is general that the search functions are used at different frequencies in accordance with preferences of a user and/or the like. This tendency is not limited to the search functions, but the same applies to other functions of the navigation device 401.

The display 11 displays two or more buttons B for switching, on the basis of the first definition information, each screen to any of screens which are associated with different functions, respectively. Therefore, the screen that can be displayed by the navigation device 401 is represented by a hierarchical structure in which there are two or more different screens to which each screen can be switched. In order to display a screen at a higher level in the hierarchical structure, a user is required to perform fewer operations. On the other hand, in order to display a screen at a lower level in the hierarchical structure, a user is required to perform more operations. The button B corresponding to a display screen in a shallower layer of a hierarchy is easier for a user to use, whereas the button B corresponding to a display screen in a deeper layer of the hierarchy is more difficult for the user to use.

The clocking section 411 obtains time data indicating the time. In Embodiment 1, the clocking section 411 obtains time data at a time point at which the display 11 has performed screen switching. The clocking section 411 may be configured to obtain time data after a predetermined time period has elapsed from the time point at which the display 11 has performed screen switching.

The transition data obtaining section 413 obtains transition data every time a user instruction is entered. In Embodiment 1, the transition data includes instruction data, screen data, and the above-mentioned time data. Such a transition data obtaining section 413 corresponds to an obtaining section.

The instruction data refers to data for identifying a user instruction. That is, the instruction data refers to data for identifying a button B which has been pressed by a user. In Embodiment 1, the instruction data is button identification (ID) data which indicates a button ID of the button B which has been pressed. In button IDs, different signs are set for the buttons B, respectively. The transition data obtaining section 413 obtains the button ID data from the display 11.

The screen data refers to data for identifying a screen that is displayed after display switching performed by the display 11, in accordance with a user instruction which has been entered. In Embodiment 1, the screen data is screen ID data which indicates screen IDs. Different signs are set, for respective screens, in the screen IDs. The transition data obtaining section 413 obtains the screen ID data from the display 11.

The transition data obtaining section 413 obtains the time data from the clocking section 411.

The transition data obtaining section 413 also determines whether or not the transition data thus obtained includes personal information. The personal information includes the location, the telephone number, and the like of a user's home or workplace. For example, it can be said that in a case where the transition data is obtained when the route guide screen described above or the telephone number search screen 460 illustrated in Fig. 3 is displayed, the transition data may include personal information.

Further, the button ID data may also indicate personal information. For example, the button ID data, which is obtained when the telephone number search screen 460 illustrated in Fig. 3 is displayed, may indicate a telephone number when arranged in chronological order. In this case, the button ID data may include personal information.

In order to determine whether or not the transition data includes personal information, the transition data obtaining section 413 uses predetermined reference screen ID information. The reference screen ID information refers to information indicating a screen ID(s) of a screen(s) which includes personal information among all of the screens which can be displayed by the display 11. The reference screen ID information is preset and stored in the first storage section 414 in advance.

Determining that the screen ID indicated in the screen ID data obtained is the same as the screen ID included in the reference screen ID information, the transition data obtaining section 413 determines that the transition data includes personal information. In contrast, in a case where the transition data obtaining section 413 has not determined that the screen ID indicated in the screen ID data obtained is the same as the screen ID included in the reference screen ID information, the transition data obtaining section 413 does not determine that the transition data includes personal information.

The transition data obtaining section 413 stores, in the first storage section 414, the transition data which has not been determined to include personal information.

The transition data which has not been determined by the transition data obtaining section 413 to include personal information is stored in chronological order in the first storage section 414. The first definition information and the reference screen ID information which are described above are also stored in the first storage section 414. Further, various programs which are to be executed by the navigation device 401, map information which is necessary for performing the navigation function, and the like are also stored in the first storage section 414.

The first transmission/reception section 450 communicates wirelessly with the server 402. In Embodiment 1, the first transmission/reception section 450 is a telecommunication control unit (TCU). The first transmission/reception section 450 transmits, to the server 2, the transition data which is stored in the first storage section 414. Further, the first transmission/reception section 450 receives second definition information from the server 402. The first transmission/reception section 450 corresponds to a first communication section. The second definition information, like the first definition information, indicates a screen layout of each screen.

The first transmission/reception section 450 is not necessarily configured to communicate with the server 2. For example, the first transmission/reception section 450 need only be configured to be capable of transmitting information to some device capable of collecting data. The transmission/reception section 50 may be an input/output section, such as a UBS terminal, which can cause data transfer by insertion of a universal serial bus (UBS) memory or the like.

The transmit control section 33 controls the first transmission/reception section 450. On receipt of a signal indicating that the ACC power is switched OFF, the transmission control section 33 causes the first transmission/reception section 450 to transmit the transition data. After the transition data is transmitted to the server 402, the transmission control section 33 deletes the transition data from the first storage section 414.

Further, the transmission control section 33 also causes two or more pieces of the transition data to be transmitted together to the server 402 at the time when the ACC power of a motor vehicle is switched OFF. This allows the navigation device 401 to reduce load on the server 402, the load being caused by frequent reception of the transition data.

The navigation device side updating section 415 updates the first definition information. Specifically, the navigation device side updating section 415 updates the first definition information, by overwriting the first definition information with the second definition information which has been transmitted from the server 402. The second definition information refers to information generated by the server 402 in accordance with the history of operations performed by a user on the navigation device 401.

The second definition information is temporarily stored in the first storage section 414 when transmitted from the server 402 to the navigation device 401.

When the navigation device 401 is activated while the second definition information is stored in the first storage section 414, the display 11 displays a confirmation screen. The confirmation screen refers to a screen for confirming with a user whether or not to change the screen layout according to the history of operations on the navigation device 401. The confirmation screen is displayed immediately after activation of the navigation device 401, in a case where the second definition information is stored in the first storage section 414.

In a case where the user chooses to change the screen layout, the navigation device side updating section 415 updates the first definition information and deletes the second definition information from the first storage section 414. In a case where the user chooses not to change the screen layout, the navigation device side updating section 415 deletes the second definition information from first storage section 414 without updating the first definition information.

The navigation device 401 may be configured to update the first definition information without confirming the intent of the user on the confirmation screen, when the second definition information is transmitted from the server 402.

As illustrated in Fig. 1, the server 402 includes a second transmission/reception section 417, a second storage section 418, an analyzing section 419, a server side updating section 420, and a second control section 421. The second storage section 418 corresponds to a server storage section.

The second transmission/reception section 417 communicates with the first transmission/reception section 450. The second transmission/reception section 417 receives the transition data transmitted from the navigation device 401. The second transmission/reception section 417 transmits the second definition information to the navigation device 401. In Embodiment 1, the second transmission/reception section 417 is a telecommunication control unit (TCU). Such a second transmission/reception section 417 corresponds to a second communication section.

The transition data which is received by the second transmission/reception section 417 is stored in chronological order in the second storage section 418. The second definition information is also stored in the second storage section 418. Further, various programs which are to be executed by the server 402 are also stored in the second storage section 418.

The analyzing section 419 analyzes the transition data stored in the second storage section 418, and generates various information which indicates the history of operations performed by a user on the navigation device 401.

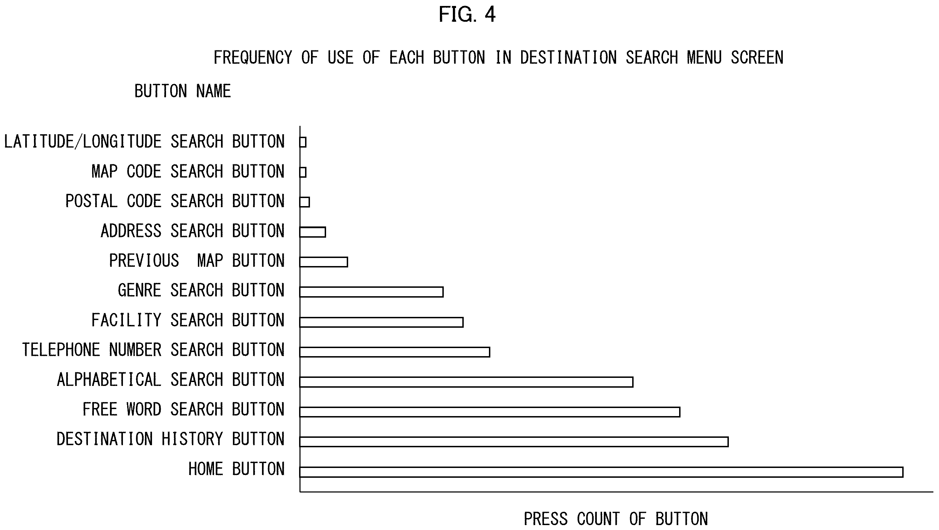

Fig. 4 is a graph showing an example result of analysis by the analyzing section 419. The graph of Fig. 4 shows the press count of each of the buttons B which are displayed on the first destination search menu screen 440a illustrated in Fig. 2. The "press count of a button B" refers to the number of times each of the buttons B is pressed by a user. The graph of Fig. 4 shows that the press count of the home button 441 is the highest, whereas the press count of a latitude/longitude search button is the lowest.

The analyzing section 419 can generate, for each of the screens, button press count information which indicates the press count of each button B, as shown in Fig. 4. The button press count information indicates the frequency of use of each button B.

The analyzing section 419 can also generate the button press count information on all of the buttons B which can be displayed by the display 11. In this case, the button press count information can indicate the frequency of use of each function which the navigation device 401 has.

In generating the button press count information concerning the first destination search menu screen 440a, the analyzing section 419 first extracts, from the transition data stored in the second storage section 418, the transition data including the screen ID data corresponding to the first destination search menu screen 440a. The analyzing section 419 then counts the number of times each button B is pressed, on the basis of the button ID data included in the transition data thus extracted. In this manner, the analyzing section 419 generates the button press count information.

Further, the analyzing section 419 can detect, on the basis of the button press count information, a button(s) B which is/are used at a relatively higher frequency and a button(s) B which is/are used at a relatively lower frequency in a predetermined period.

Further, the analyzing section 419 can also determine, on the basis of the button press count information, that a button B whose press count in a predetermined period is higher than a predetermined first threshold is a button B which is used at a high frequency. Meanwhile, the analyzing section 419 can also determine, on the basis of the button press count information, that a button B whose press count in a predetermined period is less than a predetermined second threshold that is lower than the first threshold is a button B which is used at a low frequency.

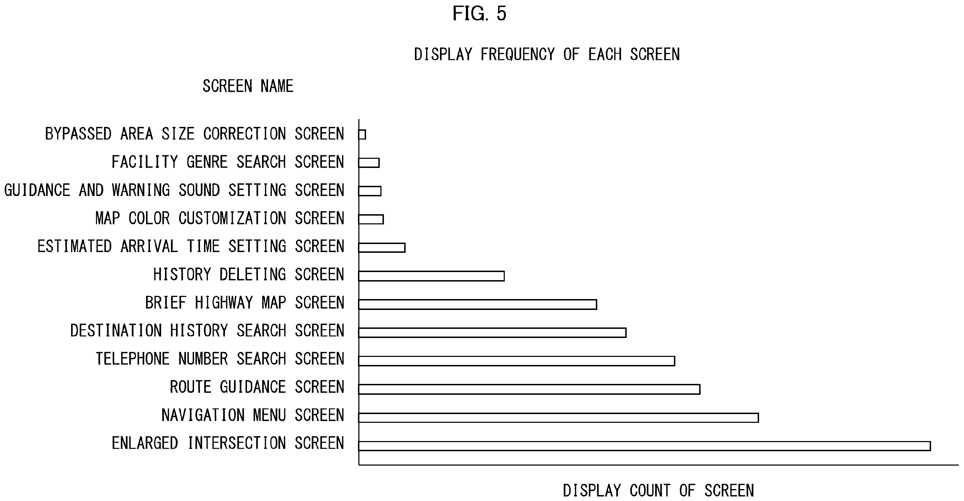

Fig. 5 is a graph showing another example result of analysis by the analyzing section 419. The graph of Fig. 5 shows the display count of each screen. The "display count" refers to the number of times the screen is displayed by screen switching by the display 11. The graph of Fig. 5 indicates that the display count of an enlarged intersection screen is the largest and the display count of a bypassed area size correction screen is the smallest. The enlarged intersection screen is a screen associated with a function of automatically enlarging a part of a map showing an intersection at the time when a motor vehicle, on which the navigation device 401 is mounted, approaches the intersection. The bypassed area size correction screen is a screen associated with a function of correcting the size of a bypassed area which a user would like to avoid passing through.

In this way, the analyzing section 419 can generate screen display count information which indicates the display count of each screen. A function associated with a screen of a larger display count is more frequently used by a user. The screen display count information also indicates the frequency of use of each function which the navigation device 401 has.

The analyzing section 419 counts the number of times each screen is displayed, on the basis of the screen data stored in the second storage section 418, and generates the screen display count information.

Further, the analyzing section 419 can detect, on the basis of the screen display count information, a screen(s) whose display count is relatively higher and a screen(s) whose display count is relatively lower.

Furthermore, the analyzing section 419 determines that a screen whose display count in a predetermined period is higher than a predetermined third threshold is a screen whose display count is relatively higher. Meanwhile, the analyzing section 419 determines a screen whose display count in a predetermined period is lower than a predetermined fourth threshold is a screen whose display count is relatively lower.

In addition, the analyzing section 419 can detect a screen that is at a lower level in the hierarchical structure in spite of a relatively higher display count of the screen. Such a screen requires much effort of a user so as to be displayed by the display 11. The analyzing section 419 may also find out whether or not it is possible to change, to a higher level in the hierarchical structure, the level of such a screen that is at a lower level in the hierarchical structure in spite of a high display count of the screen. In addition, the analyzing section 419 can detect a screen that is at a higher level in the hierarchical structure in spite of a low display count of the screen. Such a screen easily comes into a user's sight although the screen is less often used by the user. This becomes a cause that makes a screen complicated. The analyzing section 419 may also find out whether or not it is possible to change, to a lower level in the hierarchical structure, the level of such a screen that is at a higher level in the hierarchical structure in spite of a low display count of the screen.

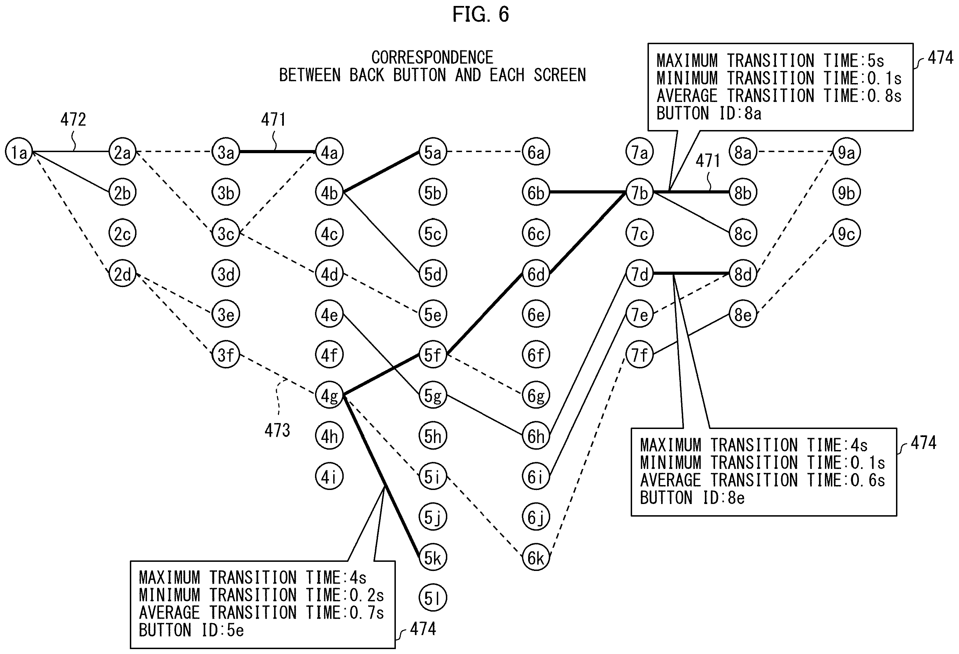

Fig. 6 is a diagram illustrating another example result of analysis by the analyzing section 419. Fig. 6 shows the correspondence between the back button 447 shown in Figs. 2 and 3 and each screen.

Sign 1a represents a screen that is displayed immediately after activation of the navigation device 401. In Embodiment 1, the sign 1a represents the foregoing navigation menu screen.

Signs 2a to 2d each represent a screen to which a transition can be made from the screen represented by the sign 1a. That is, in Embodiment 1, one of the signs 2a to 2d represents the first destination search menu screen 440a illustrated in Fig. 2.

Signs 3a to 3f each represents a screen to which a transition can be made from the screen represented by any of the signs 2a to 2d. That is, in Embodiment 1, one of the signs 3a to 3f represents the telephone number search screen 460 illustrated in Fig. 3.

Signs 4a to 4i each represents a screen to which a transition can be made from the screen represented by any of the signs 3a to 3f. That is, in Embodiment 1, one of the signs 4a to 4i represents the foregoing route guide screen.

Screens represented by signs 5a to 51, 6a to 6k, 7a to 7f, 8a to 8e, and 9a to 9c, respectively, have meanings similar to those of the signs described as above. Two or more signs aligned in one column in Fig. 6 represent screens in one hierarchical layer among hierarchical layers constituting the hierarchical structure described above. In the representation of Fig. 6, the depth of the hierarchical layers of the screens increases from a leftmost column to a rightmost column.

Some of the signs are connected to each other by line segments 471, 472, and 473. The signs connected to the right ends of the line segments 471, 472, and 473 each represent a screen which is being displayed by the display 11 when the back button 447 is pressed. The signs connected to the left ends of the line segments 471, 472, and 473 each represent a screen which is displayed by screen switching in response to a press of the back button 447. The thickness and line type of each of the line segments 471, 472, and 473 represent a difference in the press count of the back button 447. The first line segments 471 each of which is a thick solid line indicate that the press count of the back button 447 is relatively higher. The third line segments 473 each of which is a dotted line indicate that the press count of the back button 447 is relatively lower. The second line segments 472 each of which is a thin solid line indicate that the press count of the back button 447 is at an intermediate level.

For example, the sign 3a and the sign 4a are connected by a first line segment 471. Therefore, Fig. 6 indicates that when the screen represented by the sign 4a is displayed by the display 11, the back button 447 is pressed and the screen represented by the sign 4a is switched to the screen represented by the sign 3a at a relatively higher frequency. The signs that are not connected with the line segments each represent a screen on which, in a case where the screen is displayed by the display 11, the back button 447 is not pressed.

Related information 474 refers to information related to a screen that is being displayed when the back button 447 is pressed. In Embodiment 1, the related information contains information indicating each of a maximum transition time, a minimum transition time, an average transition time, and a button ID. The transition time is a time taken for switching a screen which is being displayed by the display 11 to another screen. In other words, the transition time can be said to be a time from screen switching until a press of a button B. The transition time can be obtained by using two pieces of time data which have been obtained in succession.

The maximum transition time refers to the longest transition time of two or more transition times. The minimum transition time is the shortest transition time of the two or more transition times. The average transition time is the average time of the two or more transition times.

For example, the related information 474 relevant to the screen represented by the sign 8b indicates that a maximum of 5 seconds has been taken to switch the screen represented by the sign 8b to the screen represented by the sign 7b. Further, the related information 474 indicates that a minimum of 0.1 seconds has been taken to switch the screen represented by the sign 8b to the screen represented by the sign 7b.

The button ID indicated in the related information 474 refers to the button ID of a button B which has been pressed following the back button 447. For example, the related information 474 relevant to the screen represented by the sign 8b indicates that after switching to the screen represented by sign 7b, the button B for switching to the screen represented by the sign 8a is pressed.

In Embodiment 1, three pieces of the related information 474 are generated in the descending order from the highest press count of the back button 447. However, only one piece of the related information 474 may be generated for the highest press count of the back button 447. Alternatively, the related information 474 may be generated so as to correspond to all of the first line segments 471. Alternatively, the related information 474 may be generated so as to correspond to all of the line segments 471, 472, and 473.

The related information 474 may include items other than the maximum transition time, the minimum transition time, the average transition time, and the button ID.

As described above, the analyzing section 419 can generate screen transition information which indicates the screen that is being displayed by the display 11 when the back button 447 is pressed. Such a screen is represented in Fig. 6 by a sign connected to the right end of any of the line segments 471, 472, and 473.

Further, the screen transition information may include information indicating a screen which is displayed immediately before and immediately after a screen on which the back button 447 is pressed. Such a screen is represented in Fig. 6 by a sign connected to the left end of one of the line segments 471, 472, and 473.

The screen transition information may include information indicating a frequency at which the back button 447 is pressed when a certain screen is displayed by the display 11. The frequency at which the back button 447 is pressed is represented in Fig. 6 by the thickness and line type of each of the segments 471, 472, and 473.

The screen transition information may include information indicating a user instruction which is inputted at least before or after a press of the back button 447. This user instruction is represented in Fig. 6 in the related information 474.

The screen transition information may include information indicating a transition time from a press of the back button 447 to completion of switching to another screen. Such information is indicated by the related information 474 in Fig. 6.

In generating the screen transition information, the analyzing section 419 extracts two or more pieces of transition data associated with the back button 447 from the transition data stored in the second storage section 418. The transition data includes transition data obtained as a result of a press of the back button 447 and transition data obtained preceding or subsequent to the foregoing transition data. The transition data obtained as a result of a press of the back button 447 includes the button ID data indicating the button ID of the back button 447. On the basis of the transition data extracted, the analyzing section 419 specifies the press count of the back button 447, the screen which has been displayed and on which the back button 447 has been pressed, the screen that has been displayed by screen switching after pressing the back button 447, and the like. Then, the analyzing section 419 generates the screen transition information.

Generally, a user often presses the back button 447 so as to return to a previous screen, on a screen with which the user does not understand how to operate the navigation device 401 next. In a case where a user presses a back button 447 on a screen being displayed on the display 11, the screen is likely to be difficult for a user to understand. However, such a screen may be displayed because a user has pressed the button B simply by mistake.

For example, in a case where the button B is pressed simply by mistake, the user would promptly press the back button 447. This tends to make the transition time shorter. On the other hand, in a case where it is difficult for a user to understood what operation is to be performed on a screen, the transition time tends to be longer because the user is lost. The transition time serves as an index for inferring understandability of the screen to the user.

Further, in a case where the button B is pressed simply by mistake, another button B to be pressed following the back button 447 may be, for example, a button B which is displayed next to the button B that has been pressed before pressing the back button 447. An operation method may be difficult for a user to understand, for example, in a case where the name of the button B displayed is difficult for a user to understand.

With use of the above-described two or more parameters, the analyzing section 419 can infer that a button B is not pressed simply by mistake and also infer a screen whose operation method is difficult for a user to understand. In addition, the analyzing section 419 can also infer a cause of a screen whose operation method is difficult for a user to understand.

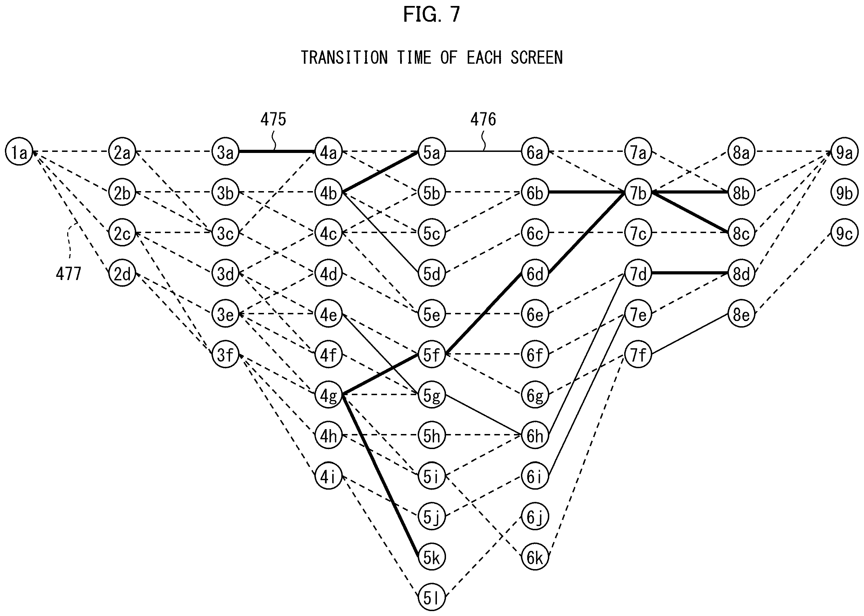

Fig. 7 is a graph showing another example result of analysis by the analyzing section 419. Fig. 7 represents a transition time of each screen.

Respective signs shown in Fig. 7 represent screens that can be displayed by the display 11, as in Fig. 6. However, in Fig. 7, the meanings of line segments 475, 476, and 477 differ from the meanings of the line segments 471, 472, and 473 shown in Fig. 6.

Specifically, the line segments 475, 476, and 477 indicate that a user instruction is inputted and a transition has been made from a screen represented by a sign connected to the left end of each of the line segments to a screen represented by a sign connected to the right end of that line segment. Such a user instruction is inputted by, for example, pressing the home button 441, the alphabetical search button 442, the address search button 443, or the like illustrated in Fig. 2.

The thickness and line type of the line segments 475, 476, and 477 each indicate an average transition time taken for a transition from a screen represented by a sign connected to the left end of a line segment to a screen represented by a sign connected to the right end of that line segment. The first line segments 475 each of which is a thick solid line indicate that the average transition time is longer than a predetermined fifth threshold. The third line segments 477 each of which is a dotted line indicate that the average transition time is shorter than a predetermined sixth threshold that is shorter than the fifth threshold. The second line segments 476 each of which is a thin solid line indicate that the average transition time is at an intermediate level.

For example, sign 1a and each of signs 2a to 2d are connected to each other by the third line segments 477. Therefore, it can be inferred that the screen represented by the sign 1a is easily understood by a user. On the other hand, sign 3a and sign 4a are connected to each other by the first line segment 475. This indicates that a long time has been taken for a transition from the screen represented by the sign 3a to the screen represented by the sign 4a. Therefore, it can be inferred that the screen represented by the sign 3a may be a screen that is difficult for the user to understand.

The analyzing section 419 can also infer how familiar a user is with the navigation device 401, whether or not a user is good at machine operation, and/or the like. For example, if the analyzing section 419 has long average transition times for most screens, it can be inferred that it has not been long since a user started using the navigation device 401, or that a user is not good at machine operation.

As described above, the analyzing section 419 can generate transition time information which indicates a transition time of each screen. In addition, the analyzing section 419 can infer a screen whose usability for a user is low, a cause of low usability, and a skill level of a user on the navigation device 401.

In generating the transition time information, the analyzing section 419 first calculates the transition time of each screen from the transition data stored in the second storage section 418. Then, the analyzing section 419 obtains the average transition time for each of the screens, and generates the transition time information.

Such analysis processing performed by the analyzing section 419 may be performed by using artificial intelligence (AI). The analyzing section 419 is trained by machine learning with use of, for example, a machine learning algorithm in which respective screens displayed by the display 11, user instructions, and transition times are associated with each other.

As described above, the button B for returning to a screen that has been previously displayed by the display 11 can be, for example, the present location button other than the back button 447. Hereinafter, among the user instructions, an instruction to return to a screen that has been previously displayed by the display 11 is referred to also as a "screen return instruction".

The present location button is a button for switching to a present location display screen. The present location display screen refers to a screen that shows, on a map, the present location of a motor vehicle equipped with the navigation device 401. The map on the present location display screen is displayed such that the periphery of the present location of the motor vehicle is enlarged. While the navigation function is used, the navigation device 401 basically displays the present location display screen.

On the present location display screen, displayed is/are a button for switching to a map screen of an area located ahead of the present location, a button for switching to a map screen of a wide area showing an entire route from the present location to the destination, and/or the like. The display 11 can also display these map screens in response to a user operation. When the present location button is pressed while the navigation function is in use, the navigation device 401 can return to the present location display screen regardless of what screen is being displayed by the display 11. In general, such a present location button is often pressed on a screen whose operation method is difficult to understand.

The analyzing section 419 can generate, with use of instruction data corresponding to the present location button instead of the instruction data corresponding to the back button 447, the screen transition information associated with the screen that is being displayed by the display 11 when the present location button is pressed. The screen transition information may include information which indicates the correspondence between a screen that is being displayed by the display 11 when the present location button is pressed and user instructions that are inputted before and after a press of the present location button. The screen transition information may include information which indicates a transition time that is taken for switching a screen that is presently displayed by the display 11 to another screen as described above.

It is possible to have a configuration in which the screen return instruction is inputted only when the back button 447 or the present location button is pressed. Alternatively, it is also possible to have a configuration in which the screen return instruction is inputted by pressing another button in addition to the back button 447 and the present location button.

The analyzing section 419 performs the above analysis at predetermined intervals. The predetermined time intervals are each, for example, 24 hours. Determining that a predetermined time has been reached, the analyzing section 419 performs the analysis. The analyzing section 419 may perform analysis by using all the transition data stored in the second storage section 418 or using transition data which are obtained by the transition data obtaining section 413 within any desired time period.

The analyzing section 419 may perform the analysis by using, among the transition data stored in the second storage section 418, a predetermined number of pieces of transition data in the order from more recently obtained transition data. Alternatively, the analyzing section 419 may perform the analysis by lowering the degree of significance of the transition data stored in the second storage section 418 from more recently obtained transition data to earlier obtained data in chronological order. The degree of significance indicates the effect of the transition data on an analysis result. More specifically, for example, among the transition data stored in the second storage section 418, the analyzing section 419 sets, to 1, the degree of significance of transition data obtained within a predetermined time period from the latest time for obtaining the transition data, and sets, to 0.5, the degree of significance of transition data obtained prior to the predetermined time period.

The analyzing section 419 can perform the analysis based on the recent usage history of the navigation device 401. That is, the second definition information is updated such that, among the screen data included in the transition data, more recently obtained screen data more significantly affects the change in the screen layout than earlier obtained screen data. Therefore, for example, a function that has not been used at all before but has been recently used frequently can be determined to be a function that is used at a high frequency.

The server side updating section 420 updates the second definition information on the basis of the result of analysis by the analyzing section 419.

For example, the server side updating section 420 updates the second definition information so that the button B for switching to a screen associated with a function that is used at a high frequency will be located at a position convenient to a user and has a size convenient to the user. Further, the server side updating section 420 updates the second definition information so that the button B for switching to a screen associated with a function that is used at a low frequency will be located at a position where the button B less easily comes into the user's sight.

As shown in the graph of Fig. 5, the buttons B displayed on the first destination search menu screen 440a are the home button 441, the destination history button 444, a free word search button 448, the alphabetical search button 442, and the telephone number search button 445 in the descending order of use frequency. Therefore, the server side updating section 420 can update the second definition information so that the free word search button 448 will be displayed on the display 11 without scrolling the screen, as illustrated in (b) of Fig. 2, on the basis of the button press count information. Further, the server side updating section 420 can update the second definition information so that the buttons B will be arranged from the top of the display 11 in the descending order of use frequency, on the basis of the button press count information.

Generally, for safety, some of functions of an in-vehicle navigation device are restricted while the motor vehicle is running. Examples of such restricted functions include a screen scroll function. Since the location of a button B used at a high frequency in the navigation device 401 is changed as described above, there is a high possibility that a function desired by a user can be performed even when restriction during running is applied.

The server side updating section 420 can update the second definition information so that a button B which is used at a relatively higher frequency will be displayed on a screen at a higher level in the hierarchical structure and a button B which is used at a relatively lower frequency is displayed on a screen at a lower level in the hierarchical structure.

In addition, the server side updating section 420 can update the second definition information so that a button B associated with a screen whose display count is relatively higher will be located at a position closer to the driver's seat than other buttons B. The server side updating section 420 can update the second definition information on the basis of the screen display count information so that the size of a button B associated with a screen that is used at a relatively higher frequency can be larger.

Further, the server side updating section 420 can update the second definition information so as to make the screen layout easy for a user to understand.

For example, the server side updating section 420 changes the locations, sizes, names and/or the like of buttons B in a screen layout of a screen that is inferred to be difficult to understand.

Further, the server side updating section 420 can update the second definition information so as to make the screen layout simple for beginners who have just started using the navigation device 401 or who are not good at machine operation. In the screen layout in this case, for example, a smaller number of buttons B are displayed at a larger size.

The content to be updated in the second definition information by the server side updating section 420 is not limited to the above.

The server side updating section 420 updates the second definition information when a predetermined condition is satisfied. Examples of the condition includes a condition in which a button B whose press count exceeds the first threshold is detected, and/or a condition in which a screen whose display count exceeds the third threshold is detected.

The server side updating section 420 transmits, to the navigation device 401 via the second transmission/reception section 417, the second definition information which has been updated. In Embodiment 1, the server side updating section 420 checks whether the power of the navigation device 401 is ON prior to transmitting the second definition information. Determining that the power of the navigation device 401 is ON, the server side updating section 420 transmits the second definition information. When the server side updating section 420 does not determine that the power of the navigation device 401 is ON, the server side updating section 420 checks whether the power of the navigation device 401 is ON again after a predetermined time interval.

The time at which the second definition information is transmitted is not limited to the above. For example, the second definition information may be transmitted to the navigation device 401 at the time when the power of the navigation device 401 is switched ON.

The second definition information is temporarily stored in the first storage section 414. In a case where the second definition information is stored in the first storage section 414, the navigation device side updating section 415 causes the display 11 to display the foregoing confirmation screen immediately after next activation of the navigation device 401.

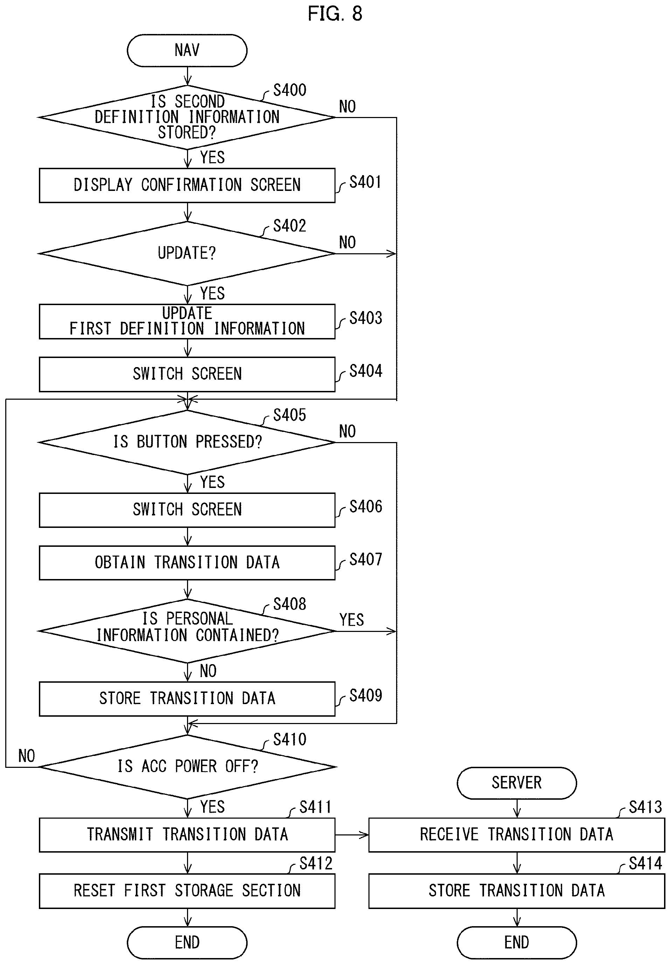

The following will specifically discuss processes which are performed by the navigation device 401 and the server 402 of the Embodiment 1. Fig. 8 is a flowchart showing a process procedure of the information processing system 400 for updating the first definition information and for obtaining the transition data. The process in this flowchart is started when the executing section 431 detects that the ACC power of a motor vehicle is switched ON. Hereinafter, in the flowchart, the navigation device 401 is also referred to simply as "nav".

In step S400, the navigation device side updating section 415 determines whether or not the second definition information is stored in the first storage section 414. If the navigation device side updating section 415 determines that the second definition information is stored in the first storage section 414, the process proceeds to step S401. If the navigation device side updating section 415 does not determine that the second definition information is stored in the first storage section 414, the process proceeds to step S405.

In step S401, the display 11 displays a confirmation screen.

In step S402, the navigation device side updating section 415 determines whether a user has selected update of the first definition information. If the navigation device side updating section 415 determines that the user has selected update of the first definition information, the process proceeds to step S403. If the navigation device side updating section 415 does not determine that the user has selected update of the first definition information, the process proceeds to step S405.

In the step S403, the navigation device side updating section 415 overwrites and updates the first definition information with the second definition information.

In step S404, the display 11 switches from the confirmation screen to the navigation menu screen.

In step S405, the display 11 determines whether or not a user has pressed the button B. If the display 11 determines that the user has pressed the button B, the process proceeds to step S406. If the display 11 does not determine that the user has pressed the button B, the process proceeds to step S410.

In the step S406, the display 11 displays a screen corresponding to a user instruction.

In step S407, the transition data obtaining section 413 obtains transition data.

In step S408, the transition data obtaining section 413 determines whether or not the transition data obtained in step S407 includes personal information. If the transition data obtaining section 413 determines that the transition data includes personal data, the process proceeds to step S410. If the transition data obtaining section 413 does not determine that the transition data includes personal data, the process proceeds to step S409.

In step S409, the transition data obtaining section 413 stores, in the first storage section 414, the transition data obtained in step S407.

In step S410, the transmission control section 33 determines whether or not the execution section 431 has detected that the ACC power is OFF. If the transmission control section 33 determines that the execution section 431 has detected that the ACC power is OFF, the process proceeds to step S411. If the transmission control section 33 does not determine that the execution section 431 has detected that the ACC power is OFF, the process returns to step S405.

In step S411, the transmission control section 33 transmits, to the server 402 via the first transmission/reception section 450, the transition data which is stored in the first storage section 414 in step S409.

In step S412, the transmission control section 33 deletes, from the first storage section 414, the transition data transmitted in step S411 to the server 402. Then, the navigation device 401 terminates the process.

In step S413, the second transmission/reception section 417 receives the transition data which has been transmitted in step S411 by the first transmission/reception section 450.

In step S414, the second control section 421 stores, in the second storage section 418, the transition data which has been received in step S413 by the second transmission/reception section 417. Then, the server 402 terminates the process.

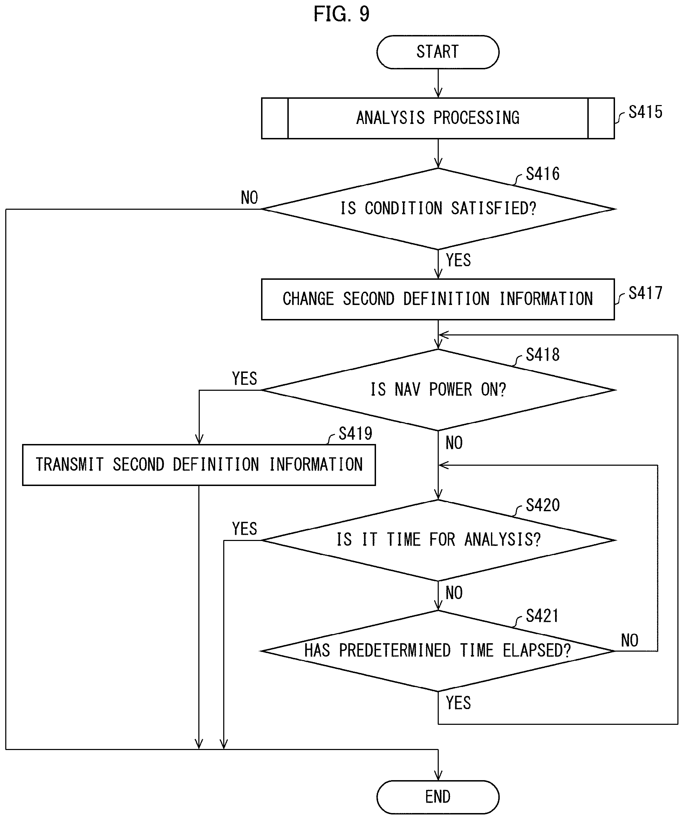

Fig. 9 is a flowchart showing a process procedure of the server 402 in the information processing system 400. The process in this flowchart is started at a predetermined time at which the analyzing section 419 is to perform analysis.

In step S415, the analyzing section 419 performs analysis processing on the basis of the transition data stored in the second storage section 418.

In step S416, the server side updating section 420 determines whether the result of analysis by the analyzing section 419 satisfies the condition for updating the second definition information. If the server side updating section 420 determines that the condition for updating the second definition information is satisfied, the process proceeds to step S418. If the server side updating section 420 does not determine that the condition for updating the second definition information is satisfied, the present flow is terminated.

In step S417, the server side updating section 420 updates the second definition information which is stored in the second storage section 418, on the basis of the result of analysis by the analyzing section 419.

In step S418, the server side updating section 420 determines whether or not the power of the navigation device 401 is ON. If the server side updating section 420 determines that the power of the navigation device 401 is ON, the process proceeds to step S419. If the server side updating section 420 does not determine that the power of the navigation device 401 is ON, the process proceeds to step S420.

In the step S419, the server side updating section 420 transmits, to the navigation device 401 via the second transmission/reception section 417, the second definition information which has been updated in step S417. Then, the server 402 terminates the process.

In step S420, the server side updating section 420 determines whether or not it is a time for performing next analysis processing by the analyzing section 419. If the server side updating section 420 determines that it is the time for next analysis processing, the server 402 terminates the present flow. Then, the server 402 restarts the process again from step S415. If the server side updating section 420 does not determine that it is the time for next analysis processing, the process proceeds to step S421.

In step S421, the server side updating section 420 checks whether a predetermined time has elapsed. This predetermined time refers to a time which has elapsed after performing, in step S418, the process of checking whether the power of the navigation device 401 is ON. Alternatively, the predetermined time refers to a time which has elapsed after performing the processing in the previous step S421. If the server side updating section 420 determines that the predetermined time has elapsed, the process returns to step S418. If the server side updating section 420 does not determine that the predetermined time has elapsed, the process returns to step S420.

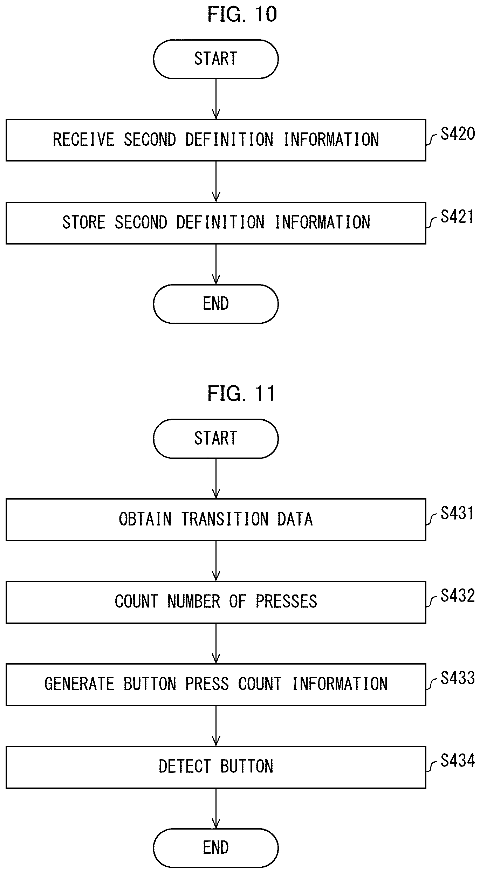

Fig. 10 is a flowchart showing a process procedure of the navigation device 401 for receiving the second definition information. The process in this flowchart starts when the second definition information is transmitted from the second transmission/reception section 417.

In step S420, the first transmission/reception section 450 receives the second definition information which has been transmitted from the server 402.

In step S421, the navigation device side updating section 415 stores, in the first storage section 414, the second definition information which has been received in step S420, and terminates the present flow.

Fig. 11 is a flowchart showing an example procedure of the analysis processing which is performed by the server 402. This flowchart shows analysis processing in the case of detecting a button B whose press count is relatively high and a button B whose press count is relatively low.

In step S431, the analyzing section 419 extracts and obtains the transition data from the second storage section 418.

In step S432, the analyzing section 419 counts the number of times each button B is pressed by using the transition data which has been obtained in step S431.

In step S433, the analyzing section 419 generates button press count information as shown in, for example, Fig. 4.

In step S434, the analyzing section 419 detects the button B whose press count is relatively high and the button B whose press count is relatively low Then, the server 402 terminates the analysis processing.

As described above, the navigation device 401, which is an information processing device of Embodiment 1, includes the display 11 which serves as an input section and a display section, the transition data obtaining section 413 which is an obtaining section, and the navigation device side updating section 415 which is an updating section.

To the display 11, user instructions are inputted. The display 11 displays a screen corresponding to a user instruction, on the basis of the first definition information which indicates the screen layout of each of respective screens corresponding to two or more functions. The transition data obtaining section 413 obtains two or more pieces of screen data which identify respective screens that are sequentially switched and displayed by the display 11 one after another in response to the user instructions. The navigation device side updating section 415 updates the first definition information on the basis of the screen data which has been obtained by the transition data obtaining section 413.

In recent years, for example, an in-vehicle navigation device tends to have an increasing number of screens that can be displayed on the display section, in accordance with addition of new functions. For this reason, manufacturers and the like that develop in-vehicle navigation systems decide specifications of the in-vehicle navigation systems, by categorizing screens according to similar functions and taking a lot of time for functional layout and the like. However, a user's usage of the in-vehicle navigation device may not match the intent of a designer.

Since the navigation device 401 of Embodiment 1 has the above configuration, the screen layout can be changed for each screen according to the history of operations performed by a user. Therefore, the navigation device 401 can update the screen layout at a predetermined time and improve usability.

The display 11 is a touch panel that also functions as an input section. The display 11 displays buttons B having respectively different name on each screen, on the basis of the first definition information. The navigation device side updating section 415 updates the first definition information so as to display, in a screen at a higher level in the hierarchical structure, a button B for switching to a screen that is displayed on the display 11 a relatively higher number of times. The display count is calculated on the basis of the screen data which has been obtained by the transition data obtaining section 413. The navigation device side updating section 415 also updates the first definition information so as to display, in a screen at a lower level in the hierarchical structure, a button B for switching to a screen whose display count is relatively lower.

Consequently, the navigation device 401 can change the screen layout of each screen so as to make it possible to quickly display a screen associated with a function that is used at a high frequency. The navigation device 401 can also increase the depth of a hierarchical layer of a screen that displays a button B for switching to a screen associated with a function that is used at a low frequency or that is not used. This can cause such a button B to less easily come into a user's sight.

Further, the navigation device side updating section 415 updates the first definition information such that among the screen data, more recently obtained screen data more significantly affects the change in the screen layout than earlier obtained screen data. Therefore, the navigation device 401 can make a change to the screen layout on the basis of the history of recent operations performed by a user.

The navigation device 401 further includes the first storage section 414 and the first transmission/reception section 450 which serves as a communication section. The first storage section 414 corresponds to a storage section. The first transmission/reception section 450 corresponds to a communication section. The first definition information is stored in the first storage section 414. The first transmission/reception section 450 transmits, to the server 402, screen data which has been obtained by the transition data obtaining section 413, and also receives, from the server 402, the second definition information which has been updated on the basis of the result of analysis of the screen data by the server 402. The navigation device side updating section 415 is configured to update, with use of the second definition information, the first definition information which is stored in the first storage section 414.

Therefore, the navigation device 401 does not need to have a component for analyzing the screen data, and can have a simple configuration.

The transition data obtaining section 413 determines whether the screen data includes personal information. The first transmission/reception section 450 is configured to transmit, to the server 402, the screen data which has been determined by the transition data obtaining section 413 as containing no personal information.

Therefore, the navigation device 401 can prevent leakage of personal data.

The information processing system 400 includes the navigation device 401 and the server 402. The navigation device 401 further includes the clocking section 411 for obtaining time data which indicates the time at which a screen is switched to another screen. The transition data obtaining section 413 further obtains instruction data which identifies a user instruction, and the time data. The server 402 includes the second storage section 418, the analyzing section 419, and the server side updating section 420. The screen data, the instruction data, and the time data are stored in association with each other in chronological order in the second storage section 418. The analyzing section 419 analyzes the screen data, the instruction data, and the time data which are stored in the second storage section 418, and infers a user's usability of the navigation device 401. The server side updating section 420 updates the second definition information on the basis of the result of analysis by the analyzing section 419.

The information processing system 400 can therefore improve the usability of the navigation device 401 after release of the information processing system 400.

### <Embodiment 2>

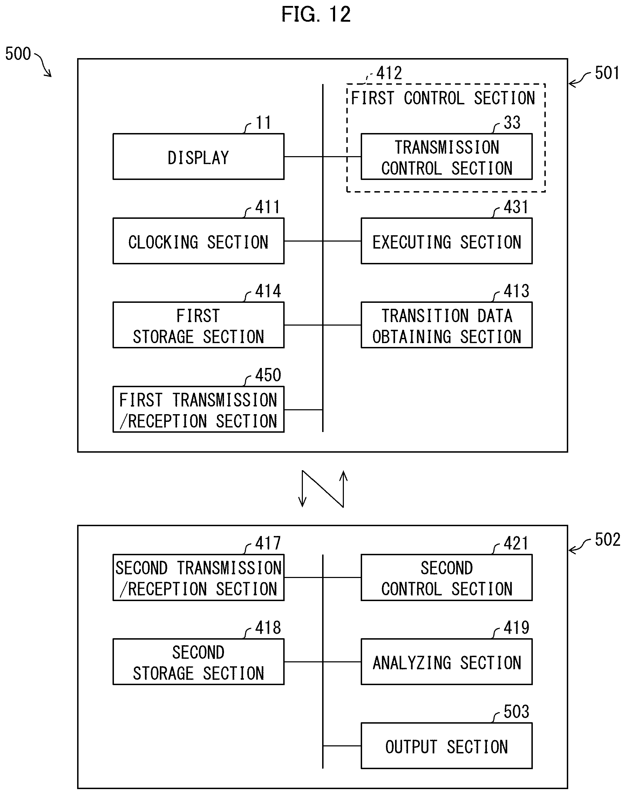

Fig. 12 is a diagram illustrating a configuration of an information processing system 500 which includes a server 502, which is an analyzing device in accordance with Embodiment 2 of the present invention. The information processing system 500 includes a navigation device 501 and a server 502. The navigation device 501 corresponds to an information processing device.

The server 502 of Embodiment 2 differs in configuration from the server 402 of Embodiment 1 in that the server 502 includes an output section 503 for outputting a result of analysis by an analyzing section 419. Components having configurations identical to those of members in Embodiment 1 are given respective reference numerals identical to those of the members in Embodiment 1, and descriptions thereof will be omitted. The navigation device 501 is configured in the same manner as the navigation device 401 of Embodiment 1, except that the navigation device 501 does not include a navigation device side updating section 415. A second transmission/reception section 417 and a second control section 421 for controlling the second transmission/reception section 417 correspond to an obtaining section for obtaining transition data.

The output section 503 outputs the result of analysis by the analyzing section 419. The output section 503 can output, for example, each of button press count information, screen display count information, screen transition information, and transition time information, in the form of any of graphs and charts as shown in Figs. 4 to 7.

Such pieces of information outputted can be used by a designer or the like when the designer or the like considers screen layouts and a hierarchical structure in improving or newly manufacturing a navigation device. As described above, the information processing system 500 can analyze information on operations performed by a user and make approaches for better cost and safer operation by improvement in operability of navigation devices. The information processing system 500 can pick up and visualize in graphs etc. "a part whose operability is poor", "a function whose frequency of use is extremely low", and the like from a statistical point of view, by using cloud technology as an analysis method. In addition, the information processing system 500 can be easily operated in such a manner that an effect of improvement is visible, because of a unique algorithm that tends to lead to convergence as the number of pieces of data increases.

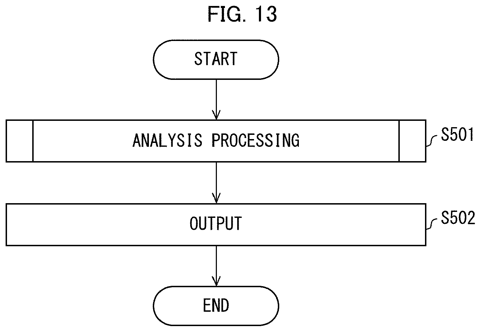

The following will specifically discuss a process which is performed by the server 502. Fig. 13 is a flowchart showing a process procedure of the server 502 in accordance with Embodiment 2. The process in this flowchart is started at a predetermined time at which the analyzing section 419 is to perform analysis.

The analysis processing of step S501 is the same as the analysis processing of the step S415 which is performed in the server 402 of Embodiment 1.

In step S502, the output section 503 outputs the result of analysis by the analyzing section 419. Then, the server 502 terminates the process.

As described above, the server 502, which is an analyzing device of Embodiment 2, includes the second transmission/reception section 417 and the second control section 421 which serve as an obtaining section, a second storage section 418 which is a storage section, and the analyzing section 419. The second transmission/reception section 417 and the second control section 421 obtain two or more pieces of instruction data and two or more pieces of screen data. The instruction data identifies each of user instructions which is sequentially inputted by a user via the display 11, which serves as an input section. The screen data identifies each of screens which are displayed on the display 11 by screen switching in accordance with the user instructions, among respective screens associated with two or more different functions. The instruction data and the screen data are stored in association with each other in chronological order in the second storage section 418. The analyzing section 419 analyzes the instruction data and the screen data which are stored in the second storage section 418. The analyzing section 419 generates, for example, the screen transition information. The screen transition information indicates a screen that is being displayed on the display 11 when among the user instructions, a screen return instruction is inputted to the display 11, the screen return instruction being an instruction to return the screen that is being displayed to another screen that has been previously displayed on the display 11.

This allows the server 502 to generate information for leading to improvement in usability of the information processing device such as the navigation device 501.

The screen transition information further includes information which indicates a screen on which, when the screen is displayed on the display 11, the screen return instruction is inputted at a relatively higher frequency. The screen transition information further includes related information 474 which indicates a user instruction which is inputted after the screen return instruction has been inputted. Therefore, the designer or the like can perform, by using the screen transition information, deep analysis for leading to improvement in usability of the information processing device.

The server 502 further includes a clocking section 411 for obtaining time which indicates the time at which the display 11 is switched. The time data is associated with the screen data and stored in the second storage section 418. The screen transition information may further include related information 474 which indicates a transition time taken for switching a screen being displayed by the display 11 to another screen. Therefore, with use of the screen transition information, the designer or the like can analyze the following: (i) with regard to a screen that is displayed in a case where the screen return instruction is inputted, whether or not the screen is displayed because a user pressed a button B by mistake on an immediately preceding screen, or (ii) whether an operation method is easy for a user to understand.

Further, the second transmission/reception section 417 and the second control section 421 obtain the instruction data and the screen data from the navigation device 501. The user instruction data and the screen data which are determined not to include personal information are stored in the second storage section 418, so that personal information can be appropriately protected.

### <Embodiment 3>

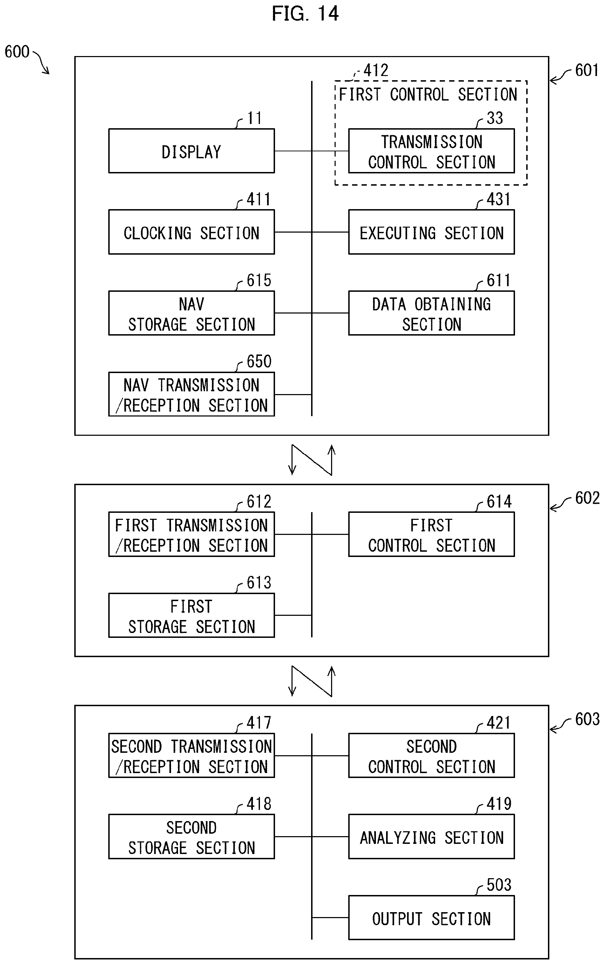

As illustrated in Fig. 14, an information processing system 600 in accordance with Embodiment 3 includes a navigation device 601, a first server 602, and a second server 603. The first server 602 includes a first transmission/reception section 612, a first storage section 613, and a first control section 614. In Embodiment 3, the first server 602 and the second server 603 are administered by different organizations. The navigation device 601 corresponds to an information processing device. The second server 603 corresponds to an analyzing device.

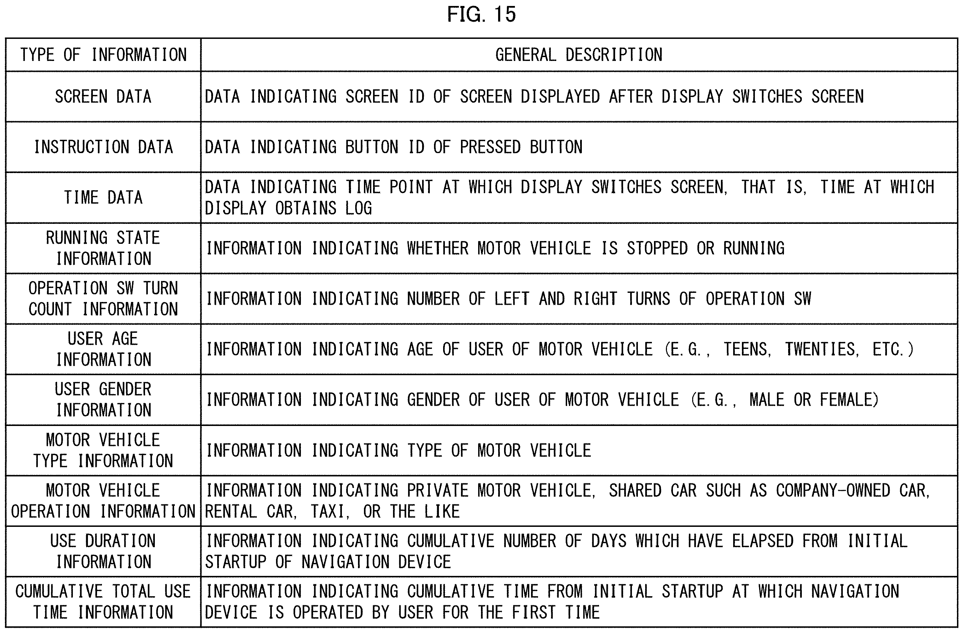

The information processing system 600 differs from Embodiment 2 mainly in that an analyzing section 419 performs analysis with use of information shown in Fig. 15. In the following description, in the information processing system 600 in accordance with Embodiment 3, components having configurations identical to those of members in Embodiment 2 are given respective reference numerals identical to those of the members in Embodiment 2, and descriptions thereof will be omitted.

The navigation device 601 includes a data obtaining section 611 in place of the transition data obtaining section 413 included in the navigation device 501 of Embodiment 2. The data obtaining section 611 differs from the transition data obtaining section 413 in Embodiment 2 in that the data obtaining section 611 is configured to be capable of obtaining running state information and operation switch (SW) turn count information in addition to transition data which includes screen data, instruction data, and time data.

The running state information refers to information which indicates whether a motor vehicle is stopped or running as a state of the motor vehicle. The data obtaining section 611 obtains the running state information in a case where there is a change in a running state of the motor vehicle. That is, the data obtaining section 611 obtains the running state information in a case where the motor vehicle has started running and a case where the motor vehicle has stopped. The data obtaining section 611 also obtains time data which indicates the time at which the running state of the motor vehicle has been changed, along with the running state information. The transmission control section 33 controls the navigation device transmission/reception section 650 so as to cause the navigation device transmission/reception section 650 to transmit, to the first server 602, the running state information and the time data every time the data obtaining section 611 obtains the running state information. Note that the data obtaining section 611 may also obtain information which indicates a state of an ACC power.

The configuration of the navigation device 601 is substantially the same as that of the navigation device 501 of Embodiment 2, except for the data-obtaining section 611. That is, the navigation device transmission/reception section 650 has a configuration similar to the configuration of the first transmission/reception section 450 of Embodiment 2. A navigation device storage section 615 has a configuration similar to the configuration of the first storage section 414 of the Embodiment 2.

The operation SW turn count information refers to the number of turns of the operation SW. The operation SW is a member which allows a user to operate the navigation device 601. The operation SW corresponds to an input section. The operation SW is configured to be able to turn clockwise or counterclockwise. The operation SW is also configured to be capable of being pressed with a finger. The operation SW is provided in a range where a hand of a user sitting in the driver's seat can reach, in the motor vehicle. The operation SW is turned clockwise or counterclockwise by the user and also pressed by the user. Such a turn and a press are included in user instructions. For example, in a case where a screen where two or more buttons B are provided is being displayed on a display 11, turning the operation SW changes a selected button B from a first button B to a second button B adjacent to the first button B. Then, when the operation SW is pressed, the second button B is set as the selected button B. Then, a present screen is switched to another screen that corresponds to the second button B set as the selected button B. The operation SW is also referred to as a rotary SW.

When the operation SW is operated, the data obtaining section 611 obtains the instruction data which indicates a user instruction inputted via the operation SW and the operation SW turn count information. The instruction data indicates information which indicates a direction in which the operation SW is turned or information which indicates the button B set as the selected button B. In Embodiment 3, the display 11 is configured to be capable of performing screen switching on the basis of the instruction data which has been inputted via the operation SW. The transmission control section 33 controls the navigation device transmission/reception section 650 so as to cause the navigation device transmission/reception section 650 to transmit, to the first server 602, the transition data and the operation SW turn count information every time the data obtaining section 611 obtains the transition data and the operation SW turn count information.

It should be noted here that the data obtaining section 611 can be configured to obtain information which indicates the number of turns of the operation SW from the start of operation of the operation SW to the stop of the operation. The data obtaining section 611 determines that the operation of the operation SW has been stopped in a case where the operation SW has not been operated for more than a predetermined time, for example, one second. The data obtaining section 611 can also determine that the operation of the operation SW has been stopped in a case where the operation SW is turned in a reverse direction. Alternatively, the data obtaining section 611 can be configured to obtain information which indicates the number of times the operation SW is turned from a time point at which a screen is displayed on the display 11 to a time point at which the screen is switched to another screen. The transmission control section 33 can control the navigation device transmission/reception section 650 so as to cause the navigator transmission/reception section 650 to transmit, to the first server 602, the transition data and the operation SW turn count information 602 every time the operation SW is turned once.

Further, the transmission control section 33 transmits, to the first server 602, the transition data and the operation SW turn count information in association with identification information for identifying the motor vehicle.

The first server 602 is administered by, for example, a motor vehicle manufacturer. The first transmission/reception section 612 has a configuration similar to the configuration of the second storage section 418 of the second server 603. The first storage section 613 has a configuration similar to the configuration of the second storage section 418 of the second server 603. The first control section 614 controls each of the first transmission/reception section 612 and the first storage section 613. The first control section 614 has a configuration similar to the configuration of the second control section 421 of the second server 603. The first server 602 communicates with each of the navigation device 601 and the second server 603.

In the first storage section 613, user age information, user gender information, motor vehicle type information, and motor vehicle operation information are stored in advance. These pieces of information are stored in the first storage section 613 by, for example, an administrator of the first server 602. Hereinafter, the information stored in the first storage section 613 by the administrator or the like is also referred to as registered information.

The user age information indicates the generation to which a user who purchased the motor vehicle belongs. The user gender information indicates the gender of the user who purchased the motor vehicle. The motor vehicle type information indicates the type of the motor vehicle. The motor vehicle operation information indicates operation information of the motor vehicle. The operation information indicates that the motor vehicle is, for example, a private motor vehicle, a shared car such as a company-owned car, a rental car, or a taxi.

The first control section 614 controls the first transmission/reception section 612 so as to cause the first transmission/reception section 612 to receive information such as the transition data from the navigation device 601. The first control section 614 controls the first storage section 613 so as to store, in the first storage section 613, the information thus received. The first control section 614 controls the first transmission/reception section 612 so as to cause the first transmission/reception section 612 to transmit, as appropriate, the information stored in the first storage section 613 to the second server 603. For example, in a case where the registered information is requested by the second server 603, the first control section 614 controls the first transmission/reception section 612 so as to cause the first transmission/reception section 612 to transmit, to the second server 603, the registered information stored in first storage section 613.

In Embodiment 3, the first control section 614 transmits, to the second server 603, the transition data, the registered information, and the like, together with the identification information.

The analyzing section 419 of the second server 603 performs analysis processing with use of the information which has been transmitted from the first server 602.

The navigation device 601 is configured not to be operated by the user while the motor vehicle is running. The analyzing section 419 performs analysis with use of the running state information. Consequently, in a case where a transition time is long, the analyzing section 419 can determine whether there is a possibility that a screen is difficult for the user to understand, or whether the user cannot perform an operation because the motor vehicle is running.

Further, it is expected that the numerical value of the operation SW turn count information becomes larger in a case where the user is unsure about what operation should be performed. The analyzing section 419 can extract a screen that may be difficult for the user to understand, by performing analysis with use of the operation SW turn count information.

The analyzing section 419 can also analyze the difference which may occur, due to the type of a motor vehicle, in usage of functions of the navigation device 601. For example, the function of destination search is considered to be used more frequently in a motor vehicle designed to be easy to drive on mountain roads than in a motor vehicle designed for driving on city roads. Such an analysis result can be used in making a plan when a designer or the like is going to introduce a new function to a specific type of motor vehicles.

The analyzing section 419 can also analyze, for example, the difference which may occur, in usage of functions of the navigation device 601, between a case where the motor vehicle is a private motor vehicle and a case where the motor vehicle is a share car, a rental car, or a taxi.

In addition, the analyzing section 419 can analyze the difference which may occur, in usage of functions of the navigation device 601, due to the age of a user in the user age information.

Further, the second control section 421 generates each of use duration information and cumulative total use time information on the basis of the transition data which has been received from the first server 602. The use duration information refers to the cumulative number of days from the time of initial startup at which the navigation device 601 is activated for the first time. The cumulative total use time information indicates a cumulative total time from the time of the initial startup at which the navigation device 601 is operated by the user for the first time. The second control section 421 determines the time of the initial startup on the basis of the transition data which has been received from the first server 602 for the first time. The second control section 421 generates each of the use duration information and the cumulative total use time information on the basis of the transition data which is received from the first server 602.

With use of the use duration information and the cumulative total use time information, the analyzing section 419 can analyze the functions of the navigation device 601 in consideration of not only whether the functions are used at a high frequency or a low frequency but also whether the functions are used at the early stage after purchase of the navigation device 601 or continuously. Further, with use of the use duration information and the cumulative total use time information, the analyzing section 419 can analyze a failure of the navigation device 601. For example, in a case where an operation time of an experienced user whose use duration information and cumulative total use time information exceed respective predetermined values becomes long from a certain time point, it is possible to perform analysis and infer that, for example, map data used in the navigation device 601 may be outdated, etc. Examples of the function used at the early stage after the purchase of the navigation device 601 include a function related to a setting of the navigation device 601, such as the function of changing a motor vehicle position mark. Examples of the continuously used functions include a destination search function.

The analysis result obtained by using the information as above can be used by a designer or the like for future product strategies. For example, the analysis result can be used by a designer or the like to consider what screens to use in designing a new navigation device or improving a navigation device.

It should be noted that in order to improve the reliability of services with use of the information processing system 600, it is preferable that the analyzing section 419 use, as appropriate, the running state information, the operation switch (SW) turn count information, the user age information, the user gender information, the vehicle type information, the vehicle operation information, the use duration information, and the cumulative total use time information.

The user age information, the user gender information, the vehicle type information, and the vehicle operation information, which are included in registered information, are obtained from the first server 602 when the analyzing section 419 performs analysis. Specifically, the second control section 421 controls the second transmission/reception section 417 so as to cause the second transmission/reception section 417 to transmit, to the first server 602, information which indicates an instruction to send the registered information to the second server 603 in a case where the analyzing section 419 is to perform the analysis. Further, the second control section 421 also controls the second transmission/reception section 417 so as to cause the second transmission/reception section 421 to receive the registered information which is transmitted from the first server 602.

The analyzing section 419 is configured to perform analysis processing at a predetermined time. The predetermined time is determined by time, day of the week, date, and/or the like. The analyzing section 419 performs analysis processing at a frequency of, for example, once a day, once a week, or once a month.

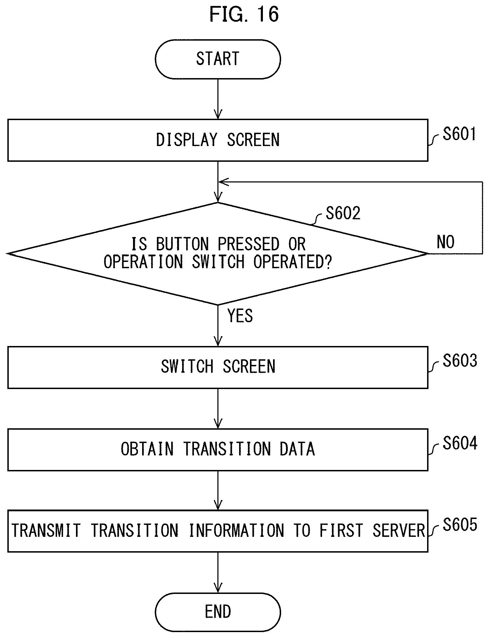

The following will specifically describe the procedure of a process which is performed by the information processing system 600. When information for screen switching is inputted to the display 11, the navigation device 601 starts a process in a flowchart shown in Fig. 16.

In step S601, the display 11 displays a screen.

In step S602, when a button B displayed on the display 11 is pressed or an operation SW is operated, the display 11 performs screen switching in step S603. It should be noted that the processing in step S603 is also performed, in a case where some event for screen switching of a display displayed on the display 11 occurs, for example, in a case where the navigation device 601 receives road traffic information such as traffic congestion information or traffic control information from the Vehicle Information and Communication System (VICS (registered trademark)) or in a case where the navigation device 601 receives a destination from a smartphone.

In step S604, the data obtaining section 611 obtains the transition data. In a case where the operation SW is operated in step S602, the data obtaining section 611 also obtains, in step S604, the operation SW turn count information. Then, the data obtaining section 611 may control the navigation device storage section 615 so as to store, in the navigation device storage section 615, the information obtained in step S604.

In step S605, the transmission control section 33 controls the navigation transmission/reception section 650 so as to cause the navigation device transmission/reception section 650 to transmit the transition data to the first server 602. When the operation SW turn count information is also obtained in step S604, the transmission control section 33 controls, in step S605, the navigation transmission/reception section 650 so as to cause the navigation device transmission/reception section 650 to also transmit the operation SW turn count information to the first server 602. Then, the present process is terminated.

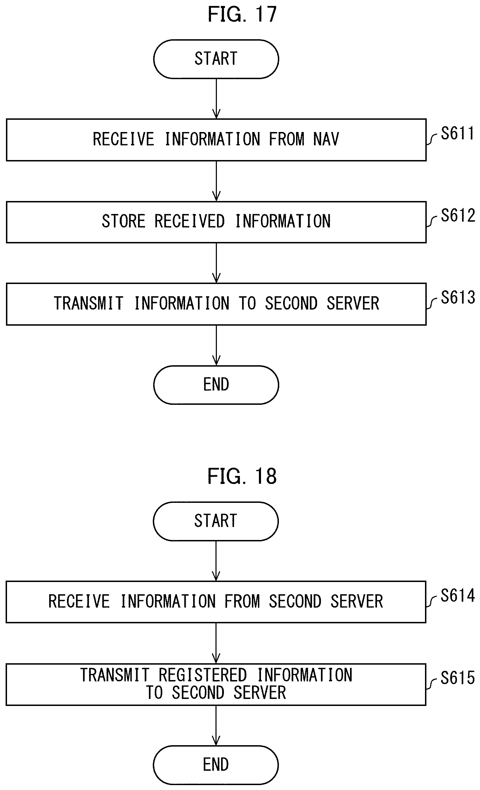

When the information such as the transition data is transmitted from the navigation device 601, the first server 602 starts a process in a flowchart shown in Fig. 17.

In step S611, the first control section 614 controls the first transmission/reception section 612 so as to cause the first transmission/reception section 612 to receive the information which is transmitted from the navigation device 601.

In step S612, the first control section 614 controls the first storage section 613 so as to store, in the first storage section 613, the information received in step S611.

In step S613, the first control section 614 controls the second transmission/reception section 417 so as to cause the second transmission/reception section 417 to transmit, to the second server 603, the information stored in the first storage section 613 in step S612. Then, the present process is terminated.

Further, the first server 602 starts a process in a flowchart shown in Fig. 18 when the second server 603 requests the registered information.

In step S614, the first control section 614 receives, from the second server 603, information which indicates an instruction to transmit the registered information.

In step S615, the first control section 614 controls the first transmission/reception section 612 so as to cause the first transmission/reception section 612 to transmit, to the second server 603, the registered information which is stored in the first storage section 613. Then, the present process is terminated.

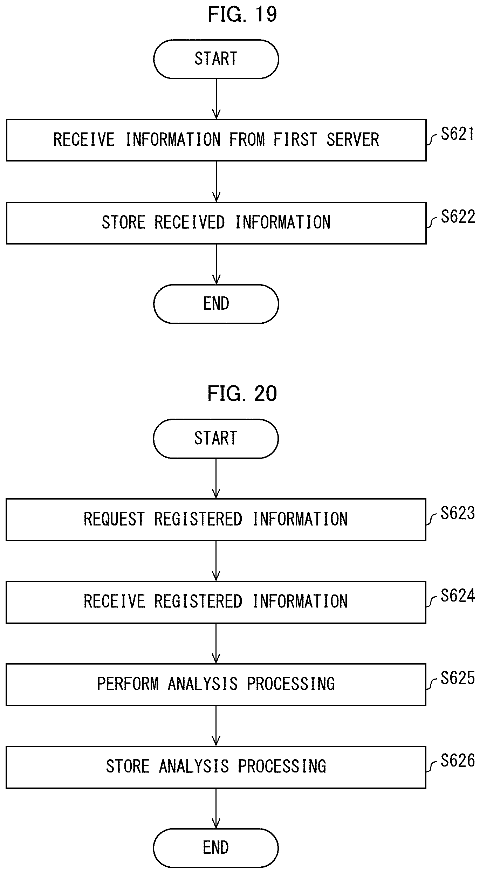

When the information such as the transition data is transmitted from the first server 602, the second server 603 starts a process in a flowchart shown in Fig. 19.

In step S621, the second control section 421 controls the second transmission/reception section 417 so as to cause the second transmission/reception section 421 to receive the information which is transmitted from the first server 602.

In step S622, the second control section 421 controls the second storage section 418 so as to store, in the second storage section 418, the data which has been received in step S621. Then, the present process is terminated.

The second server 603 starts a process in a flowchart shown in Fig. 20 at a time at which the analysis processing is to be performed.

In step S623, the second control section 421 controls the second transmission/reception section 417 so as to cause the second transmission/reception section 417 to transmit, to the first server 602, a request for the registered information.

In step S624, the second control section 421 controls the second transmission/reception section 417 so as to cause the second transmission/reception section 417 to receive the registered information from the first server 602.

In step S625, the analyzing section 419 performs analysis processing.

In step S626, the analyzing section 419 stores a result of the analysis processing in the second storage section 418.

Although Embodiments 1 to 3 of the present invention have been described above, the device configuration, the control method, and the like of an embodiment of the present invention are not limited to only those of the embodiments described above.

For example, although in Embodiment 1, first update information is updated with second update information, an embodiment of the present invention is not limited to this configuration. For example, it is possible to have a configuration in which (i) the server 402 transmits, to the navigation device 401, the screen display count information and the button press count information, and (ii) the navigation device side updating section 415 updates update information, on the basis of the screen display count information and the button press count information.

Further, although in Embodiment 1, the server 502 serves as the analyzing device, the navigation device 501 may have a configuration corresponding to the analyzing device. In this case, the transition data obtaining section 413 corresponds to the obtaining section.

Furthermore, although in Embodiment 1, the navigation device 401 transmits the transition data to the server 402 when the ACC power is turned OFF, an embodiment of the present invention is not limited to this configuration. For example, the navigation device 401 may be configured to transmit the transition data to the server 402 every time the transition data is obtained. This would allow the server 402 to obtain the transition data in real time.

In Embodiments 1 and 2, the transition data obtaining section 413 may be configured to further obtain invalid operation data. The invalid operation data identifies an invalid operation that is performed by a user. Examples of the invalid operation include a tapping operation, a flicking operation, and a swiping operation performed at a part which is not an input section on the display 11. In some screen layout, an image displayed by the display 11 may appear, to a user, an input section. The image which appears, to a user, an input section may become a cause that makes it difficult to understand an operation method of the navigation device 401 or 501.

If the transition data obtaining section 413 obtains the invalid operation data, the analyzing section 419 can generate information which indicates a screen on which, when the screen has been displayed on the display 11, the invalid operation has been performed. The analyzing section 419 can also include, in the screen transition information, the information which indicates a screen on which the invalid operation has been performed. The analyzing section 419 can analyze what made the image appear to the user an input section, and further analyze how to modify the screen layout.

Although in Embodiments 1 and 2, the server 402 or 502 obtains the transition data from one navigation device 401 or 501, an embodiment of the present invention is not limited to this configuration. For example, the servers 402 and 502 may be each configured to obtain the transition data from two or more of the navigation devices 401 or 501 which are mounted on different motor vehicles, respectively.

In addition, although in Embodiments 1 and 2, the mobile body is a motor vehicle, an embodiment of the present invention is not limited to this configuration. The mobile body can be, for example, a motorcycle, a bicycle, a wheelchair, a ship, an aircraft, or a drone. The mobile body may be a human.

Further, although in Embodiments 1 and 2, the information processing device is the navigation device 401 or 501, an embodiment of the present invention is not limited to this configuration. The information processing device can be, for example, a mobile terminal such as a smartphone or a tablet, a personal computer, or a game machine. In this case, it is possible to have a configuration in which the mobile terminal is attached to a motorcycle, and the mobile terminal obtains log information of the motorcycle. Further, the mobile terminal can be configured to be held by a person, and to obtain log information on movement of the person.

Further, in Embodiment 3, the information processing system 600 is not limited to the configuration in which the use duration information and the cumulative total use time information are generated in the second server 603. The information processing system 600 may be configured such that the use duration information and the cumulative total use time information are generated in the navigation device 601 or the first server 602. In such a configuration, in a case where the analyzing section 419 performs analysis, the first control section 614 controls the second transmission/reception section 417 so as to cause the second transmission/reception section 417 to obtain the use duration information and the cumulative total use time information from the navigation device 601 or the first server 602.

Further, although in Embodiment 3, the first server 602 transmits, to the second server 603, the transition data and the like together with the identification information, the first server 602 may be configured not to transmit the identification information to the second server 603.

In addition, each function in Embodiments 1 and 2 above can be realized by centralized processing performed by a single device, or can be realized by distributed processing which is performed by two or more devices.

The present invention encompasses configurations other than those described above, and can be applied in many variations within the spirit of the present invention. Further, configurations disclosed in different embodiments and variations may be combined.

Aspects of the present invention can also be expressed as follows:
An analyzing device in accordance with a first aspect of the present disclosure includes an obtaining section and an analyzing section. The obtaining section obtains each of instruction data and screen data from an information processing device. The information processing device has an input section and a display section. Via the input section, user instructions are inputted. The user instructions refer to instructions made by a user. The display section displays two or more screens by screen switching. The screens are each a screen associated with a predetermined function. The instruction data identifies a user instruction. The screen data identifies a screen. The screen refers to a screen that is displayed on the display section by screen switching in a case where the user instruction has been inputted. The analyzing section analyzes the instruction data and the screen data which have been obtained by the obtaining section.

The analyzing device in accordance with the first aspect can generate information which, when a designer or the like develops an information processing device, can lead to improvement in usability of the information processing device that includes the input section and the display section.

In an analyzing device in accordance with a second aspect of the present disclosure, the analyzing section generates screen transition information. The screen return instruction indicates a screen that has been displayed on the display section, in a case where a screen return instruction is inputted via the input section. The screen return instruction is an instruction to return the screen that is presently displayed on the display section to the screen that has been previously displayed.

The analyzing device in accordance with the second aspect can generate information which, when a designer or the like develops an information processing device, can lead to improvement in usability of the information processing device that includes the input section and the display section.

In an analyzing device in accordance with a third aspect of the present disclosure, the screen transition information further includes: information indicating, among the two or more screens, a screen to which, when the screen is displayed on the display section, the screen return instruction is inputted at a relatively higher frequency; and information indicating the user instruction inputted at least before or after input of the screen return instruction.

The analyzing device in accordance with the third aspect can generate information which indicates a screen of relatively lower usability.

An information processing system in accordance with a fourth aspect of the present disclosure further includes a clocking section configured to obtain time data indicating time at which screen switching is performed. The screen transition information further includes information indicating a transition time taken for switching from the screen that is presently displayed on the display section to another screen of the two or more screens.

The analyzing device in accordance with the fourth aspect can generate information which allows for analysis of the cause which has led to input of the screen return instruction.

In the analyzing device in accordance with a fifth aspect of the present disclosure, the obtaining section obtains, via wireless communication, the instruction data and the screen data from a navigation device. The navigation device is the information processing device. Neither of the instruction data and the screen data which are obtained by the obtaining section contains personal information.

The analyzing device in accordance with the fifth aspect can protect personal information.

An information processing system in accordance with a sixth aspect of the present disclosure includes an input section, a display section, an obtaining section, an analyzing section, and an updating section. Via the input section, a user instruction is inputted. The user instruction refers to an instruction made by a user. The display section displays two or more screens by screen switching. The screens are each associated with a predetermined function. The display section displays the two or more screens by screen switching, on the basis of the user instruction and definition information. The definition information indicates a screen layout. The obtaining section obtains instruction data and screen data. The instruction data identifies the user instruction. The user instruction refers to an instruction inputted via the input section. The screen data identifies a screen. The screen refers to a screen that is displayed on the display section by screen switching. The analyzing section analyzes the instruction data and the screen data. The instruction data and the screen data each refers to data which has been obtained by the obtaining section. The updating section updates the definition information, on the basis of a result of analysis by the analyzing section.

An information processing system in accordance with the sixth aspect can make a change to the screen layout, on the basis of the history of operations performed by a user on the information processing device. This makes it possible to have favorable usability.

In an information processing system in accordance with a seventh aspect of the present disclosure, the display section is a touch panel. The touch panel also has a function as an input section. The display section displays a button which differs on each of the screens, on the basis of the definition information. The updating section updates the definition information so as to cause, in a screen at a higher level in a hierarchical structure, display of the button for switching to a screen whose display count is relatively higher. The display count refers to the number of times the screen is displayed on the display section. The updating section updates the definition information so as to display, in a screen at a lower level in a hierarchical structure, the button for switching to a screen whose display count is relatively lower.

The information processing system in accordance with the seventh aspect can reduce a user's trouble of causing a screen associated with a highly frequently used function to be displayed. Further, in the information processing device in accordance with the seventh aspect, a button for switching a screen to another screen associated with a less frequently used function can be arranged to less easily come into a user's sight.

In an information processing system in accordance with an eighth aspect of the present disclosure, the updating section updates the definition information such that, among pieces of the screen data sequentially obtained by the obtaining section, a newer piece of the screen data is more significant than an older piece of the screen data.

The information processing system in accordance with the eighth aspect can make a change to a screen layout based on the history of latest operations performed by a user.

The information processing system in accordance with a ninth aspect of the present disclosure further includes a storage section, a server, and a communication section. In the storage section, first definition information is stored. The first definition information is the above-described definition information. The server has the analyzing section. The communication section transmits, to the server, the screen data. The screen data refers to screen data obtained by the obtaining section. The communication section receives, from the server, second definition information. The second definition information refers to definition information generated on the basis of the result of the analysis. The updating section updates the first definition information by using the second definition information. The first definition information refers to definition information stored in the storage section.

The information processing system in accordance with the ninth aspect can have a simple configuration since the analysis is performed by the server.

In an information processing system in accordance with a tenth aspect of the present disclosure, the obtaining section determines whether or not the screen data contains personal information. The communication section transmits, to the server, the screen data which does not contain personal information.

The information processing device in accordance with the tenth aspect can protect personal information.

An information processing system in accordance with an eleventh aspect of the present disclosure further includes a clocking section. The clocking section obtains time data. The time data indicates time. The time refers to time at which screen switching is performed. The obtaining section further obtains the time data. The analyzing section analyzes the screen data, the instruction data, and the time data. The screen data, the instruction data, and the time data each refers to data which has been obtained by the obtaining section. The analyzing section infers a screen of low usability for the user.

The information processing system in accordance with the eleventh aspect can improve the usability of the information processing device after the information processing device has been released.

### Reference Signs List

11 display
400 information processing system
401 navigation device
402 server
411 clocking section
413 transition data obtaining section
414 first storage section
415 navigation device side updating section
417 second transmission/reception section
418 second storage section
419 analyzing section
421 second control section
450 first transmission/reception section
474 related information
502 server
B button

## Claims

1. An analyzing device comprising:
an obtaining section configured to obtain instruction data and screen data from an information processing device including (a) an input section via which user instructions are inputted, the user instructions indicating instructions made by a user, and (b) a display section which displays two or more screens by screen switching, the two or more screens being each a screen associated with a predetermined function, the instruction data identifying a user instruction among the user instructions, the screen data identifying, among the two or more screens, a screen that is displayed on the display section by the screen switching in a case where the user instruction has been inputted; and
an analyzing section configured to analyze the instruction data and the screen data which have been obtained by the obtaining section.

2. The analyzing device as set forth in claim 1, wherein the analyzing section is configured to generate screen transition information indicating, among the two or more screens, a screen that has been previously displayed on the display section, in a case where a screen return instruction among the user instructions is inputted to the input section, the screen return instruction being an instruction to return the screen that is presently displayed on the display section to the screen that has been previously displayed.

3. The analyzing device as set forth in claim 2, wherein the screen transition information further includes:
information indicating, among the two or more screens, a screen to which, when the screen is displayed on the display section, the screen return instruction is inputted to the input section at a relatively higher frequency; and
information indicating the user instruction inputted at least before or after input of the screen return instruction.

4. The analyzing device as set forth in claim 2 or 3, further comprising
a clocking section configured to obtain time data indicating time at which the screen switching is performed,
the screen transition information further including information indicating a transition time taken for switching from the screen that is presently displayed on the display section to another screen of the two or more screens.

5. The analyzing device as set forth in any one of claims 1 to 4, wherein:
the obtaining section obtains, via wireless communication, the instruction data and the screen data from a navigation device which is the information processing device; and
neither of the instruction data and the screen data which are obtained by the obtaining section contains personal information.

6. An information processing system comprising:
an input section via which a user instruction is inputted, the user instruction indicating an instruction made by a user;
a display section configured to display two or more screens by screen switching, on the basis of the user instruction and definition information indicating a screen layout, the two or more screen being each associated with a predetermined function;
an obtaining section configured to obtain instruction data and screen data, the instruction data identifying the user instruction inputted to the input section, the screen data identifying, among the two or more screens, a screen that is displayed on the display section by the screen switching;
an analyzing section configured to analyze the instruction data and the screen data each of which has been obtained by the obtaining section; and
an updating section configured to update the definition information, on the basis of a result of analysis by the analyzing section.

7. The information processing section as set forth in claim 6, wherein:
the display section is a touch panel having a function as the input section and displays a button that differs on each of the screens, on the basis of the definition information; and
the updating section updates the definition information so as to (i) display, in a screen at a higher level in a hierarchical structure among the two or more screens, the button for switching to the screen that is displayed on the display section a relatively higher number of times and (ii) display, in a screen at a lower level in a hierarchical structure among the two or more screens, the button for switching to the screen that is displayed on the display section a relatively lower number of times.

8. The information processing section as set forth in claim 6 or 7, wherein the updating section updates the definition information such that, among pieces of the screen data sequentially obtained by the obtaining section, a newer piece of the screen data is more significant than an older piece of the screen data.

9. The information processing system as set forth in any one of claims 6 to 8, further comprising:
a storage section in which first definition information is stored, the first definition information being the definition information;
a server having the analyzing section; and
a communication section configured to (i) transmit, to the server, the screen data obtained by the obtaining section and (ii) receive, from the server, second definition information generated on the basis of the result of the analysis,
the updating section updating, by using the second definition information, the first definition information stored in the storage section.

10. The information processing system as set forth in claim 9, wherein:
the obtaining section determines whether or not the screen data contains personal information; and
the communication section transmits, to the server, the screen data which does not contain the personal information.

11. The information processing system as set forth in any one of claims 6 to 10, further comprising
a clocking section configured to obtain time data indicating time at which the screen switching is performed,
the obtaining section being configured to further obtain the time data,
the analyzing section being configured to analyze the screen data, the instruction data, and the time data each of which has been obtained by the obtaining section, and to infer, among the two or more screens, a screen of low usability for the user.
